(19) Europäisches Patentamt
European Patent Office
Office européen des brevets

(11) EP 3 889 223 A1

(12) # EUROPEAN PATENT APPLICATION
published in accordance with Art. 153(4) EPC

(43) Date of publication:
**06.10.2021 Bulletin 2021/40**

(21) Application number: **19889153.3**

(22) Date of filing: **25.11.2019**

(51) Int Cl.:
***C09D 5/02*** *(2006.01)*
***C08L 101/06*** *(2006.01)*
***C09D 201/06*** *(2006.01)*
***C08K 3/20*** *(2006.01)*
***C09D 7/63*** *(2018.01)*

(86) International application number:
**PCT/JP2019/045981**

(87) International publication number:
**WO 2020/111000 (04.06.2020 Gazette 2020/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.11.2018 JP 2018222334**

(71) Applicant: **Asahi Kasei Kabushiki Kaisha**
**Tokyo 1000006 (JP)**

(72) Inventors:
- **INNAMI, Yu**
**Tokyo 100-0006 (JP)**
- **YAMAUCHI, Toyoaki**
**Tokyo 100-0006 (JP)**

(74) Representative: **Strehl Schübel-Hopf & Partner**
**Maximilianstrasse 54**
**80538 München (DE)**

(54) **SEMICARBAZIDE COMPOSITION, WATER-BASED COATING COMPOSITION, COATING FILM, ARTICLE, AND METHOD FOR PRODUCING SEMICARBAZIDE COMPOSITION**

(57) A semicarbazide composition contains a semicarbazide compound (A1) derived from a hydrazine and an isocyanate compound (a1) having an isocyanate group, and a semicarbazide compound (B1) derived from a hydrazine and an isocyanate compound (b1) having an isocyanate group and having a different structure from the isocyanate compound (a1), wherein the absolute value of the difference in the solubility parameters of the isocyanate compound (a1) and the isocyanate compound (b1) is at least 0.15 but not more than 2.10. A method for producing a semicarbazide composition includes, in sequence, a step 2-1 of reacting a hydrazine and an isocyanate compound (a2) having at least one cyclic structure within the molecule to obtain a semicarbazide compound (A2), and a step 2-2 of reacting a hydrazine and an isocyanate compound (b2) not having a cyclic structure within the molecule to obtain a semicarbazide compound (B2).

EP 3 889 223 A1

**Description**

TECHNICAL FIELD

The present invention relates to a semicarbazide composition, a water-based coating composition, a coating film, an article, and a method for producing a semicarbazide composition.

Priority is claimed on Japanese Patent Application No. 2018-222334, filed November 28, 2018, the content of which are incorporated herein by reference.

BACKGROUND ART

In recent years, from the viewpoints of odors and restrictions on the environmental discharge of organic solvents in the fields of coating materials and coatings, the development of products that replace conventional organic solvent-based coating materials with water-based coating materials is proceeding rapidly. Compared with organic solvent-based coating materials, water-based coating materials obtained from water-based resin compositions tend to exhibit inferior water resistance, coating film strength, and stain resistance and the like when used to form coating films, and therefore in order to improve the physical properties of the coating film, functional groups are introduced into the resin of the water-based resin composition to enable crosslinking, thereby forming coating films composed of crosslinked moieties between resin molecules, or between a curing agent and the resin.

However, because curing agents generally exhibit high reactivity, the curing reaction tends to proceed upon mixing with the resin having crosslinkable functional groups, and therefore the longest time over which the composition can be used (the pot life) is short, and the curing agent and the resin are typically distributed separately. Accordingly, not only is a step of mixing the curing agent and the resin required prior to use, but the resulting mixture must also be used promptly following mixing.

Further, one known technique for increasing the pot life involves protecting the reactive functional group of the curing agent with another compound, applying the curing agent in a mixed state with the resin, and then conducting a step such as a heating step to detach the protective group and allow the curing reaction to proceed. However, this technique requires a considerable amount of heating to detach the protective group, meaning it cannot be used in applications that require curing at normal temperatures, and is problematic in terms of satisfying demands for reduced energy costs by lowering heating temperature.

Hydrazone crosslinking, which utilizes a dehydration condensation reaction between a curing agent obtained from a hydrazine derivative and a resin having a carbonyl group is attracting much attention as a potential curing reaction that satisfies the above demands. For example, by adding a dicarboxylic acid dihydrazide as a curing agent to a water dispersion of a carbonyl group-containing copolymer, a water-based coating material having excellent normal-temperature crosslinking properties and storage stability can be provided (for example, see Patent Document 1).

Further, water-based coating materials that use a semicarbazide compound, which is a reaction product of an isocyanate and a hydrazine, as a curing agent, and utilize the crosslinking reaction of this curing agent with a carbonyl group-containing resin have also been proposed (for example, see Patent Document 2).

However, in the crosslinking reaction disclosed in Patent Document 1, because a compound of high hydrophilicity such as sebacic acid dihydrazide or adipic acid dihydrazide is used, a drawback arises in that the obtained crosslinked coating film has significantly impaired water resistance.

Further, in the crosslinking reaction using a semicarbazide compound disclosed in Patent Document 2, although the issue of water resistance is resolved, because the compound has a bulky cyclic structure within the molecule, diffusion of the molecules during film formation and in the crosslinking step is slow, meaning the crosslinking reaction requires time at normal temperature. Accordingly, a problem arises in that time must be allowed following film formation of the crosslinked coating film before another coating material is overlaid on top.

PRIOR ART LITERATURE

Patent Documents

Patent Document 1: Japanese Unexamined Patent Application, First Publication No. Hei 06-287457

Patent Document 2: Japanese Patent (Granted) Publication No. 5990277

SUMMARY OF INVENTION

Problems to be Solved by the Invention

The present invention has been developed in light of the above circumstances, and provides a semicarbazide composition that has favorable solubility and dispersibility in coating materials, and exhibits excellent water resistance and transparency when formed as a coating film, as well as a method for producing the semicarbazide composition, and a water-based coating composition, a coating film and an article that use the semicarbazide composition.

Means for Solving the Problems

As a result of intensive investigation aimed at resolving the issues described above, the inventors of the present invention discovered that by using a semicarbazide composition containing a semicarbazide compound derived from a hydrazine and two isocyanate compounds having different structures and having an absolute value for the difference in the solubility parameters (hereafter sometimes abbreviated as the "SP value") that falls within a prescribed range, a semicarbazide composition could be provided which exhibits superior curability at normal temperature, even in short periods of time, and also displays excellent water resistance and hardness when formed as a coating film, thus enabling them to complete the present invention.

In other words, the present invention includes the following aspects.

A semicarbazide composition according to a first aspect of the present invention contains a semicarbazide compound (A1) derived from a hydrazine and an isocyanate compound (a1) having an isocyanate group, and a semicarbazide compound (B1) derived from a hydrazine and an isocyanate compound (b1) having an isocyanate group and having a different structure from the isocyanate compound (a1), wherein the absolute value of the difference in the solubility parameters (SP values) of the isocyanate compound (a1) and the isocyanate compound (b1) is at least 0.15 but not more than 2.10.

The number of moles of structural units derived from the isocyanate compound (b1) in the composition, relative to the number of moles of structural units derived from the isocyanate compound (a1), may be at least 0.1 mol% but not more than 20 mol%.

The isocyanate compound (a1) may be an isocyanate compound having at least one cyclic structure within the molecule, and the isocyanate compound (b1) may be an isocyanate compound not having a cyclic structure within the molecule.

A semicarbazide composition according to a second aspect of the present invention contains:

a semicarbazide compound (A2) derived from a hydrazine and an isocyanate compound (a2) having at least one cyclic structure within the molecule, and
a semicarbazide compound (B2) derived from a hydrazine and an isocyanate compound (b2) not having a cyclic structure within the molecule, wherein
the number of moles of structural units derived from the isocyanate compound (b2) in the composition, relative to the number of moles of structural units derived from the isocyanate compound (a2), is at least 0.1 mol% but not more than 20 mol%.

The number average molecular weights of the isocyanate compound (b1) and the isocyanate compound (b2) may be 270 or less.

The isocyanate compound (a1) and the isocyanate compound (a2) may be alicyclic isocyanates.

The isocyanate compound (b1) or the isocyanate compound (b2) may be an aliphatic isocyanate.

The isocyanate compound (a1) or the isocyanate compound (a2) may be isophorone diisocyanate, 1,3-bis(isocyanatomethyl)-cyclohexane or 4,4'-dicyclohexylmethane diisocyanate.

The isocyanate compound (b1) or the isocyanate compound (b2) may be butane diisocyanate, pentamethylene diisocyanate, hexamethylene diisocyanate, trimethylhexamethylene diisocyanate, 4-isocyanatomethyl-1,8-octamethylene diisocyanate, or lysine ester triisocyanate.

The semicarbazide composition according to the above first aspect or the above second aspect may also contain water.

The amount of the water, relative to the total mass of volatile components contained in the semicarbazide composition, may be 70% by mass or more.

A water-based coating composition according to a third aspect of the present invention contains the semicarbazide composition according to the above first aspect or the above second aspect, and a carbonyl group-containing resin (C).

The amount of carbonyl group-containing polymerizable monomer units in the carbonyl group-containing resin (C), relative to the total mass of polymerizable monomer units, may be at least 1% by mass but not more than 30% by mass.

A coating film according to a fourth aspect of the present invention is obtained by curing the water-based coating composition according to the above third aspect.

An article according to a fifth aspect of the present invention includes the coating film according to the above fourth aspect.

A method for producing a semicarbazide composition according to a sixth aspect of the present invention includes, in sequence, a step 2-1 of reacting a hydrazine and an isocyanate compound (a2) having at least one cyclic structure within the molecule to obtain a semicarbazide compound (A2), and a step 2-2 of reacting a hydrazine and an isocyanate compound (b2) not having a cyclic structure within the molecule to obtain a semicarbazide compound (B2).

The reaction temperature for the reaction of the hydrazine and the isocyanate compound (a2) having at least one cyclic structure within the molecule or the isocyanate compound (b2) not having a cyclic structure within the molecule may be 25°C or lower.

Effects of the Invention

By employing the semicarbazide composition and the production method of the aspects described above, a semicarbazide composition can be provided that has favorable solubility and dispersibility in coating materials, and exhibits excellent water resistance and transparency when formed as a coating film. The water-based coating composition of the aspect described above exhibits excellent water resistance and transparency when formed as a coating film. The coating film and the article of the aspects described above exhibit excellent water resistance and transparency.

EMBODIMENTS FOR CARRYING OUT THE INVENTION

Embodiments for carrying out the present invention (hereafter referred to as "embodiments of the present invention" or "present embodiments") are described below in detail. The following embodiments of the present invention are merely examples for describing the present invention, and are not intended to limit the invention to the following content. The present invention may be suitably modified within the scope of the invention.

<<Semicarbazide Composition>>

<First Embodiment>

A semicarbazide composition of this embodiment of the present invention contains a semicarbazide compound (A1) and a semicarbazide compound (B1). The semicarbazide compound (A1) is a compound derived from a hydrazine and an isocyanate compound (a1) having an isocyanate group (hereafter sometimes referred to as simply "the isocyanate compound (a1)"), namely a reaction product of the hydrazine and the isocyanate compound (a1). The semicarbazide compound (B1) is a compound derived from a hydrazine and an isocyanate compound (b1) having an isocyanate group and having a different structure from the isocyanate compound (a1) (hereafter sometimes referred to as simply "the isocyanate compound (b1)"), namely a reaction product of the hydrazine and the isocyanate compound (b1). The absolute value of the difference in the solubility parameters (SP values) of the isocyanate compound (a1) and the isocyanate compound (b1) is at least 0.15 but not more than 2.10, preferably at least 0.16 but not more than 2.02, more preferably at least 0.32 but not more than 1.82, and even more preferably at least 0.50 but not more than 1.49. By ensuring that the absolute value of the difference in the SP values is at least as large as the above lower limit, a composition having favorable solubility and dispersibility in coating materials can be obtained, whereas by ensuring that the above absolute value is not more than the above upper limit, excellent transparency can be achieved when forming a coating film.

The SP value can be determined using known methods. For example, the SP value can be calculated using the Fedors method disclosed in "Asahi Kasei Coatings Report No. 193". Specifically, in the Fedors method, it is assumed that the cohesive energy density and the molar molecular volume are both dependent on the type and number of substituents, and therefore by using the formula shown below and the constants shown in Table 1, the SP value can be estimated from the molecular structure. In the formula below, $\Sigma E_{coh}$ represents the sum of the cohesive energies of the various structural units, and $\Sigma V$ represents the sum of the molar molecular volumes of the various structural units.

[Numerical formula 1]

$$\delta = [\Sigma E_{coh} / \Sigma V]^{1/2}$$

[Table 1]

| | Cohesive energy | | Molar molecular volume |
|---|---|---|---|
| | $E_{coh}$ (cal/mol) | $E_{coh}$ (J/mol) | V ($cm^3$/mol) |
| $-CH_3$ | 1,125 | 4,710 | 33.5 |
| $-CH_2-$ | 1,180 | 4,940 | 16.1 |
| -CH< | 820 | 3,430 | -1.0 |
| >C< | 350 | 1,470 | -19.2 |
| $=CH_2$ | 1,030 | 4,310 | 28.5 |
| =CH- | 1,030 | 4,310 | 13.5 |
| >C= | 1,030 | 4,310 | -5.5 |
| HC≡ | 920 | 3,850 | 27.4 |
| -C≡ | 1,690 | 7,070 | 6.5 |
| -CN | 6,100 | 25,530 | 24.0 |
| -OH | 7,120 | 29,800 | 10.0 |
| -NCO | 6,800 | 28,470 | 35.0 |
| -OH (disubstituted or adjacent C atoms) | 5,220 | 21,850 | 13.0 |
| -O- | 800 | 3,350 | 3.8 |
| -CHO | 5,100 | 21,350 | 22.3 |
| -CO- | 4,149 | 17,370 | 10.8 |
| -COOH | 6,600 | 27,630 | 28.5 |
| -COO- | 4,300 | 18,000 | 18.0 |
| $CO_3$ (carbonate) | 4,200 | 17,580 | 22.0 |
| $C_2O_3$ (anhydride) | 7,300 | 30,560 | 30.0 |
| HCOO- (formate) | 4,300 | 18,000 | 32.5 |
| $-CO_2-CO_2-$ (oxalate) | 6,400 | 26,790 | 37.3 |
| $-HCO_3$ | 3,000 | 12,560 | 18.0 |
| F | 1,000 | 4,190 | 18.0 |
| -F (disubstituted) | 850 | 3,560 | 20.0 |
| -F (trisubstituted) | 550 | 2,300 | 22.0 |
| $-CF_2-$ (perfluoro compounds) | 1,020 | 4,270 | 23.0 |
| $-CF_3$ (perfluoro compounds) | 1,020 | 4,270 | 57.5 |
| -Cl | 2,760 | 11,550 | 24.0 |
| -Cl (disubstituted) | 2,300 | 9,630 | 26.0 |

Further, the number of moles of structural units derived from the isocyanate compound (b1) in the semicarbazide composition of the present embodiment, relative to the number of moles of structural units derived from the isocyanate compound (a1), is preferably at least 0.1 mol% but not more than 20 mol%, more preferably at least 0.5 mol% but not more than 18 mol%, even more preferably at least 1.0 mol% but not more than 15 mol%, and particularly preferably at least 1.5 mol% but not more than 10 mol%.

By ensuring that the number of moles of structural units derived from the isocyanate compound (b1) relative to the number of moles of structural units derived from the isocyanate compound (a1) (hereafter sometimes abbreviated as "the (b1)/(a1) molar ratio") is at least as large as the above lower limit, the effects of steric hindrance in the film formation step at room temperature are reduced, curing occurs in a shorter period of time, and the hydrophobicity in the obtained coating film, and particularly the hydrophobicity of crosslinking points linking resin molecules, is enhanced, meaning the water resistance of the coating film is more superior. On the other hand, by ensuring that the (b1)/(a1) molar ratio is not more than the above upper limit, the hardness of the obtained coating film is more superior.

It is preferable that the isocyanate compound (a1) is an isocyanate compound having at least one cyclic structure within the molecule, whereas the isocyanate compound (b1) is an isocyanate compound not having a cyclic structure within the molecule. In other words, it is preferable that the semicarbazide compound (A1) is a reaction product of a hydrazine and an isocyanate compound having at least one cyclic structure within the molecule, that the semicarbazide compound (B1) is a reaction product of a hydrazine and an isocyanate compound not having a cyclic structure within the molecule, and that the semicarbazide compound (A1) and the semicarbazide compound (B1) are separate compounds. By adding a combination of two semicarbazide compounds having structural units derived from the above isocyanate compounds of different structures, rather than adding a single semicarbazide compound derived from an isocyanate compound having at least one cyclic structure within the molecule, an isocyanate compound not having a cyclic structure within the molecule and a hydrazine (a semicarbazide compound having structural units derived from isocyanate compounds of different structures within the same molecule), the storage stability can be further improved.

Here, the expression "cyclic structure" indicates a ring that has been closed with covalent bonds, and excludes molecules and the like that can adopt a cyclic structure via bonds other than covalent bonds such as hydrogen bonding. Further, functional groups that detach from the crosslinking agent during coating material blending or the film formation process and are not retained within the molecular skeleton of the crosslinking agent, including known isocyanate group blocking agents such as imidazoles and pyrazoles, are also excluded.

As a result of having the composition described above, the semicarbazide composition of the present embodiment displays favorable solubility and dispersibility in coating materials, and exhibits excellent water resistance and transparency when formed as a coating film.

Each of the constituent components included in the semicarbazide composition of the present embodiment are described below in further detail.

<Semicarbazide Compounds>

Generally, a "semicarbazide compound" refers to a compound derived from an isocyanate compound and a hydrazine, namely a reaction product of an isocyanate compound and a hydrazine.

The semicarbazide composition of the present embodiment contains the semicarbazide compound (A1) and the semicarbazide compound (B1) as semicarbazide compounds. In the semicarbazide composition of this embodiment, the semicarbazide compound (A1) and the semicarbazide compound (B1) may include isomers of the respective compounds, and the functional groups at the molecular terminals may be functional groups other than semicarbazide groups.

[Isocyanate Compounds]

Examples of the isocyanate compounds used in the production of the semicarbazide compound (A1) and the semicarbazide compound (B1) include the isocyanate compound (a1) and the isocyanate compound (b1) respectively. The isocyanate compound (b1) is a compound having an isocyanate group that has a different structure from the isocyanate compound (a1). The absolute value of the difference in the SP values for the isocyanate compound (a1) and the isocyanate compound (b1) is at least 0.15 but not more than 2.10.

There are no particular limitations on the isocyanate compounds that may be used as the isocyanate compound (a1) and the isocyanate compound (b1), and combinations of compounds which satisfy the above requirement for the absolute value of the difference in SP values may be selected and used as appropriate. Examples of such isocyanate compounds include aliphatic isocyanate monomers, alicyclic isocyanate monomers, aromatic isocyanate monomers, and polyisocyanates obtained by polymerizing any of these isocyanate monomers.

There are no particular limitations on the aliphatic isocyanate monomers, and examples include aliphatic diisocyanates and aliphatic triisocyanates. Specific examples of the aliphatic diisocyanates include butane diisocyanate, hexamethylene diisocyanate (HDI), pentamethylene diisocyanate (PDI), and trimethylhexamethylene diisocyanate. Specific examples of the aliphatic triisocyanates include 4-isocyanatomethyl-1,8-octamethylene diisocyanate (TTI) and lysine ester triisocyanate (LTI).

There are no particular limitations on the alicyclic isocyanate monomers, and examples include isophorone diisocyanate (IPDI), 1,3-bis(isocyanatomethyl)-cyclohexane, and 4,4'-dicyclohexylmethane diisocyanate.

There are no particular limitations on the aromatic isocyanate monomers, and examples include xylylene diisocyanate (XDI), tolylene diisocyanate, naphthalene diisocyanate (NDI), and diphenylmethane diisocyanate (MDI).

There are no particular limitations on the polyisocyanates obtained by polymerizing any of the above isocyanate monomers, and examples include polyisocyanates of (1) to (8) described below:

(1) polyisocyanates having an uretdione group obtained by cyclization/dimerization of two isocyanate groups;
(2) polyisocyanates having an isocyanurate group or iminooxadiazinedione group obtained by cyclization/trimerization of three isocyanate groups;
(3) polyisocyanates having a biuret group obtained by reacting three isocyanate groups and one water molecule;
(4) polyisocyanates having an oxadiazinetrione group obtained by reacting two isocyanate groups and one molecule of carbon dioxide;
(5) polyisocyanates having a plurality of urethane groups obtained by reacting one isocyanate group and one hydroxyl group;
(6) polyisocyanates having an allophanate group obtained by reacting two isocyanate groups and one hydroxyl group;
(7) polyisocyanates having an acylurea group obtained by reacting one isocyanate group and one carboxyl group; and
(8) polyisocyanates having a urea group obtained by reacting one isocyanate group and one primary or secondary amine.

These isocyanate compounds may have a portion of the isocyanate groups protected with a blocking agent or modified with an alcohol compound or amine compound or the like.

The isocyanate compound (a1) is preferably an isocyanate compound having at least one cyclic structure within the molecule. Including a cyclic structure within the molecule of the isocyanate compound (a1) means that, compared with a chain-like isocyanate compound having a similar molecular weight, not only can the water solubility of the derived semicarbazide compound be enhanced, but the hardness of the obtained coating film can also be improved. The cyclic structure may have any appropriate form, such as a 4-membered ring, a 5-membered ring, or a 6-membered ring or the like.

Examples of preferred compounds for the isocyanate compound (a1) include alicyclic isocyanate monomers, aromatic isocyanate monomers, polyisocyanates obtained by polymerizing these monomers, and polyisocyanates having an isocyanurate ring or uretdione ring or the like derived from the above isocyanate monomers. One of these isocyanate compounds (a1) may be used alone, or a combination of two or more such compounds may be used. Among the various possibilities, at least one alicyclic isocyanate selected from the group consisting of alicyclic isocyanate monomers and alicyclic polyisocyanates obtained by polymerizing such monomers is particularly preferred as the isocyanate compound (a1). Ensuring that the cyclic structure is an alicyclic structure not only yields excellent weather resistance, but also results in an improvement in the water solubility of the derived semicarbazide compound. This type of isocyanate compound (a1) is preferably an alicyclic diisocyanate, more preferably IPDI, 1,3-bis(isocyanatomethyl)-cyclohexane or 4,4'-dicyclohexylmethane diisocyanate, and even more preferably IPDI.

Further, the isocyanate compound (b1) is preferably an isocyanate compound not having a cyclic structure within the molecule. By not including a cyclic structure within the molecule of the isocyanate compound (b1), steric hindrance is less likely to occur in the film formation process, and the functional group (semicarbazide group) of the curing agent and the functional group of the resin can react more easily, meaning the curability in a short period of time at normal temperature is excellent. Provided the isocyanate group does not have a cyclic structure, the group may be linear or branched.

Among the various possibilities, at least one aliphatic isocyanate selected, for example, from the group consisting of aliphatic isocyanate monomers and polyisocyanates obtained by polymerizing such monomers is particularly preferred as the isocyanate compound (b1). Using an aliphatic isocyanate as the isocyanate compound (b1) yields superior coating film weather resistance. One of these isocyanate compounds (b1) may be used alone, or a combination of two or more such compounds may be used.

Furthermore, the isocyanate compound (b1) is preferably an isocyanate compound with a number average molecular weight of 270 or less, and more preferably an isocyanate compound with a number average molecular weight of 260 or less. By ensuring that the number average molecular weight is not more than the above upper limit, the fluidity of the molecule during curing is excellent, meaning the curability in a short period of time at normal temperature can be further improved. The number average molecular weight of the isocyanate compound (b1) can be measured, for example, using the gel permeation chromatography (GPC) method.

This type of isocyanate compound (b1) is preferably an aliphatic isocyanate monomer, more preferably butane diisocyanate (number average molecular weight: 140), HDI (number average molecular weight: 168), PDI (number average molecular weight: 154), trimethylhexamethylene diisocyanate (number average molecular weight: 210), TTI (number average molecular weight: 251) or LTI (number average molecular weight: 267), and is even more preferably HDI.

[Hydrazine]

Examples of hydrazines that can be used in the production of the semicarbazide compounds include hydrazine ($NH_2NH_2$), monoalkyl-substituted hydrazine compounds, ethylene-1,2-dihydrazine, propylene-1,3-dihydrazine, and butylene-1,4-dihydrazine. Examples of the monoalkyl-substituted hydrazine compounds include monomethylhydrazine, monoethylhydrazine, and monobutylhydrazine. Among the various possibilities, from the viewpoint of achieving superior reactivity between the produced semicarbazide group and the carbonyl group of the resin, hydrazine ($NH_2NH_2$) is preferred. Hydrazine may be used in the either anhydrous form or as a monohydrate, but in terms of production safety, the use of hydrazine monohydrate ($NH_2NH_2 \cdot H_2O$) is preferred.

The semicarbazide composition of the present embodiment may contain a hydrazine. The hydrazine contained in the semicarbazide composition of this embodiment may be unreacted material (residue) derived from the raw material following production of the semicarbazide compound (A1) and the semicarbazide compound (B1), or may be a compound that has been added intentionally following production of each semicarbazide compound. The amount of this hydrazine, relative to the total mass of the semicarbazide composition, is preferably less than 500 ppm by mass, more preferably less than 450 ppm by mass, and even more preferably less than 400 ppm by mass. By ensuring that the amount of hydrazine is less than the above upper limit, the water resistance of the obtained coating film, and particularly coating films obtained upon curing at low temperature for a short period of time, can be further improved, and irritating odors derived from residual hydrazine in the coating film can be better reduced in the coating film immediately following curing.

On the other hand, although the lower limit for the amount of hydrazine is preferably 0 pm (namely, no hydrazine), because removing all hydrazine down to this level is difficult in terms of maintaining a balance between productivity and effect, requiring distillation at excessively reduced pressure or repeated adsorption treatment with activated carbon or the like, the inclusion of a small amount of 0.1 ppm by mass or the like is preferred.

<Other Constituent Components>

The semicarbazide composition of the present embodiment may also contain a solvent in addition to the semicarbazide compounds described above. In those cases where a solvent is included, the semicarbazide composition of the present embodiment becomes a liquid composition. The solvent may either be water or an organic solvent. Examples of the organic solvent include methanol, ethanol, isopropanol, tetrahydrofuran, diethyl ether, chloroform, dichloroethane, toluene, xylene, cyclohexane, hexane, heptane, carbon disulfide and butyl acetate.

From an environmental perspective, an organic solvent is preferably not included as a solvent, but because removing all organic solvent down to such a concentration is difficult in terms of maintaining a balance between productivity and effect, requiring distillation at excessively reduced pressure or the like, the water content relative to the total mass of volatile components contained in the semicarbazide composition is preferably at least 70% by mass, more preferably at least 75% by mass, even more preferably at least 80% by mass, and particularly preferably 85% by mass or greater. The water content can be measured by analyzing the volatile component contained in the semicarbazide composition using a heating method, and then determining the amount of water contained in the obtained volatile component using the Karl Fischer method. In a specific example of the analysis method for the volatile component using a heating method, first, using the semicarbazide composition as a sample, the mass (W0 g) of an aluminum cup is measured, approximately 1 g of the sample is placed in the cup, and the mass (W1 g) of the cup prior to heating and drying is measured. The cup containing the sample is then heated in a dryer at 105°C for three hours. The heated cup is then cooled to room temperature, and the mass (W2 g) of the cup is remeasured. The mass percentage of the reduction in mass of the sample from before heating to after heating is calculated as the volatile component using the formula shown below.

$$\text{Volatile component (\% by mass)} = (W1-W2) / (W1-W0) \times 100\%$$

Further, the semicarbazide composition of the present embodiment may also contain other additives in addition to the semicarbazide compounds described above, provided these additives do not impair the effects of the present invention. Examples of these other additives include thickeners, preservatives, ultraviolet absorbers, radical scavengers, and resins and the like.

<Second Embodiment>

A semicarbazide composition of this embodiment of the present invention contains a semicarbazide compound (A2) and a semicarbazide compound (B2). The semicarbazide compound (A2) is a compound derived from a hydrazine and an isocyanate compound (a2) having at least one cyclic structure within the molecule, namely a reaction product of the hydrazine and the isocyanate compound (a2). The semicarbazide compound (B2) is a compound derived from a hydrazine and an isocyanate compound (b2) not having a cyclic structure within the molecule, namely a reaction product of the hydrazine and the isocyanate compound (b2). Further, the semicarbazide compound (A2) and the semicarbazide compound (B2) are different compounds.

Here, the expression "cyclic structure" indicates a ring that has been closed with covalent bonds, and excludes molecules and the like that can adopt a cyclic structure via bonds other than covalent bonds such as hydrogen bonding.

Further, functional groups that detach from the crosslinking agent during coating material blending or the film formation process and are not retained within the molecular skeleton of the crosslinking agent, including known isocyanate group blocking agents such as imidazoles and pyrazoles, are also excluded.

Further, in the semicarbazide composition of the present embodiment, the number of moles of structural units derived from the isocyanate compound (b2), relative to the number of moles of structural units derived from the isocyanate compound (a2), is at least 0.1 mol% but not more than 20 mol%, preferably at least 0.5 mol% but not more than 18 mol%, more preferably at least 1.0 mol% but not more than 15 mol%, and even more preferably at least 1.5 mol% but not more than 10 mol%.

By ensuring that the number of moles of structural units derived from the isocyanate compound (b2) relative to the number of moles of structural units derived from the isocyanate compound (a2) (hereafter sometimes abbreviated as "the (b2)/(a2) molar ratio") is at least as large as the above lower limit, the effects of steric hindrance in the film formation step at room temperature are reduced, curing occurs in a shorter period of time, and the hydrophobicity in the obtained coating film, and particularly the hydrophobicity of crosslinking points linking resin molecules, is enhanced, meaning the water resistance of the coating film is more superior. On the other hand, by ensuring that the (b2)/(a2) molar ratio is not more than the above upper limit, the hardness of the obtained coating film is more superior.

As a result of having the composition described above, the semicarbazide composition of the present embodiment exhibits satisfactory curability even in a short period of time at normal temperature, and exhibits excellent water resistance and hardness when formed as a coating film.

Each of the constituent components included in the semicarbazide composition of the present embodiment are described below in further detail.

<Semicarbazide Compounds>

Generally, a "semicarbazide compound" refers to a compound derived from an isocyanate compound and a hydrazine, namely a reaction product of an isocyanate compound and a hydrazine.

The semicarbazide composition of the present embodiment contains the semicarbazide compound (A2) and the semicarbazide compound (B2) as semicarbazide compounds. In the semicarbazide composition of this embodiment, the semicarbazide compound (A2) and the semicarbazide compound (B2) may include isomers of the respective compounds, and the functional groups at the molecular terminals may be functional groups other than semicarbazide groups.

[Isocyanate Compounds]

Examples of the isocyanate compounds used in the production of the semicarbazide compound (A2) and the semicarbazide compound (B2) include the isocyanate compound (a2) and the isocyanate compound (b2) respectively.

The isocyanate compound (a2) is an isocyanate compound having at least one cyclic structure within the molecule. Including a cyclic structure within the molecule of the isocyanate compound (a2) means that, compared with a chain-like isocyanate compound having a similar molecular weight, not only can the water solubility of the derived semicarbazide compound be enhanced, but the hardness of the obtained coating film can also be improved. The cyclic structure may have any appropriate form, such as a 4-membered ring, a 5-membered ring, or a 6-membered ring or the like.

Examples of preferred compounds for the isocyanate compound (a2) include alicyclic isocyanate monomers. Ensuring that the cyclic structure is an alicyclic structure not only yields excellent weather resistance, but also results in an improvement in the water solubility of the derived semicarbazide compound. Examples of alicyclic isocyanates include alicyclic diisocyanates and alicyclic polyisocyanates. Examples of the alicyclic diisocyanates include isophorone diisocyanate (IPDI), 1,3-bis(isocyanatomethyl)-cyclohexane, and 4,4'-dicyclohexylmethane diisocyanate. Examples of the alicyclic polyisocyanates include polyisocyanates having an isocyanurate ring or uretdione ring or the like derived from an isocyanate compound. One of these isocyanate compounds (a2) may be used alone, or a combination of two or more such compounds may be used. Further, the isocyanate compound (a2) may have a portion of the isocyanate groups protected with a blocking agent or modified with an alcohol compound or amine compound or the like.

Among the various possibilities, the isocyanate compound (a2) is preferably an alicyclic diisocyanate, more preferably isophorone diisocyanate (IPDI), 1,3-bis(isocyanatomethyl)-cyclohexane or 4,4'-dicyclohexylmethane diisocyanate, and even more preferably IPDI.

The isocyanate compound (b2) is an isocyanate compound not having a cyclic structure within the molecule. By not including a cyclic structure within the molecule of the isocyanate compound (b2), steric hindrance is less likely to occur in the film formation process, and the functional group (semicarbazide group) of the curing agent and the functional group of the resin can react more easily, meaning the curability in a short period of time at normal temperature is excellent. Provided the isocyanate group does not have a cyclic structure, the group may be linear or branched.

Examples of preferred compounds for the isocyanate compound (b2) include aliphatic isocyanates. Using an aliphatic isocyanate as the isocyanate compound (b2) yields superior coating film weather resistance. Examples of aliphatic isocyanates include aliphatic diisocyanates, aliphatic triisocyanates and aliphatic polyisocyanates. Examples of the aliphatic diisocyanates include butane diisocyanate, hexamethylene diisocyanate (HDI), pentamethylene diisocyanate (PDI), and trimethylhexamethylene diisocyanate. Examples of the aliphatic triisocyanates include 4-isocyanatomethyl-1,8-octamethylene diisocyanate (TTI) and lysine ester triisocyanate (LTI). Examples of the aliphatic polyisocyanates include polyisocyanates derived from the above aliphatic diisocyanates or the above aliphatic triisocyanates. One of these isocyanate compounds (b2) may be used alone, or a combination of two or more such compounds may be used. Further, the isocyanate compound (b2) may have a portion of the isocyanate groups protected with a blocking agent or modified with an alcohol compound or amine compound or the like.

Among the various possibilities, the isocyanate compound (b2) is preferably an aliphatic isocyanate monomer, more preferably butane diisocyanate, HDI, PDI, trimethylhexamethylene diisocyanate, TTI or LTI, and even more preferably HDI.

[Hydrazine]

Examples of hydrazines that can be used in the production of the semicarbazide compounds include hydrazine ($NH_2NH_2$), monoalkyl-substituted hydrazine compounds, ethylene-1,2-dihydrazine, propylene-1,3-dihydrazine, and butylene-1,4-dihydrazine. Examples of the monoalkyl-substituted hydrazine compounds include monomethylhydrazine, monoethylhydrazine, and monobutylhydrazine. Among the various possibilities, from the viewpoint of achieving superior reactivity between the produced semicarbazide group and the carbonyl group of the resin, hydrazine ($NH_2NH_2$) is preferred. Hydrazine may be used in the either anhydrous form or as a monohydrate, but in terms of production safety, the use of hydrazine monohydrate) is preferred.

The semicarbazide composition of the present embodiment may contain a hydrazine. The hydrazine contained in the semicarbazide composition of this embodiment may be unreacted material (residue) derived from the raw material following production of the semicarbazide compound (A2) and the semicarbazide compound (B2), or may be a compound that has been added intentionally following production of each semicarbazide compound. The amount of this hydrazine, relative to the total mass of the semicarbazide composition, is preferably less than 500 ppm by mass, more preferably less than 450 ppm by mass, and even more preferably less than 400 ppm by mass. By ensuring that the amount of hydrazine is less than the above upper limit, the water resistance of the obtained coating film, and particularly coating films obtained upon curing at low temperature for a short period of time, can be further improved, and irritating odors derived from residual hydrazine in the coating film can better be reduced in the cured coating film.

On the other hand, although the lower limit for the amount of hydrazine is preferably 0 pm (namely, no hydrazine), because removing all hydrazine down to this level is difficult in terms of maintaining a balance between productivity and effect, requiring distillation at excessively reduced pressure or repeated adsorption treatment with activated carbon or the like, the inclusion of a small amount of 0.1 ppm by mass or the like is preferred.

<Other Constituent Components>

The semicarbazide composition of the present embodiment may also contain a solvent in addition to the semicarbazide compounds described above. In those cases where a solvent is included, the semicarbazide composition of the present embodiment becomes a liquid composition. The solvent may either be water or an organic solvent. Examples of the organic solvent include methanol, ethanol, isopropanol, tetrahydrofuran, diethyl ether, chloroform, dichloroethane, toluene, xylene, cyclohexane, hexane, heptane, carbon disulfide and butyl acetate.

From an environmental perspective, an organic solvent is preferably not included as a solvent, but because removing all organic solvent down to such a concentration is difficult in terms of maintaining a balance between productivity and effect, requiring distillation at excessively reduced pressure or the like, the water content relative to the total mass of volatile components contained in the semicarbazide composition is preferably at least 70% by mass, more preferably at least 75% by mass, even more preferably at least 80% by mass, and particularly preferably 85% by mass or greater. The water content can be measured by analyzing the volatile component contained in the semicarbazide composition using a heating method, and then determining the amount of water contained in the obtained volatile component using the Karl Fischer method. In a specific example of the analysis method for the volatile component using a heating method, first, using the semicarbazide composition as a sample, the mass (W0 g) of an aluminum cup is measured, approximately 1 g of the sample is placed in the cup, and the mass (W1 g) of the cup prior to heating and drying is measured. The cup containing the sample is then heated in a dryer at 105°C for three hours. The heated cup is then cooled to room temperature, and the mass (W2 g) of the cup is remeasured. The mass percentage of the reduction in mass of the sample from before heating to after heating is calculated as the volatile component using the formula shown below.

$$\text{Volatile component (\% by mass)} = (W1-W2) / (W1-W0) \times 100\%$$

Further, the semicarbazide composition of the present embodiment may also contain other additives in addition to the semicarbazide compounds described above, provided these additives do not impair the effects of the present invention. Examples of these other additives include thickeners, preservatives, ultraviolet absorbers, radical scavengers, and resins and the like.

<<Method for Producing Semicarbazide Composition>>

<First Embodiment>

A method for producing a semicarbazide composition according to a first embodiment of the present invention (hereafter sometimes referred to as simply "the production method of the present embodiment") includes the following step 1-1 and step 1-2 in that sequence.

Namely, a step 1-1 of reacting the isocyanate compound (a1) and a hydrazine to obtain the semicarbazide compound (A1); and
a step 1-2 of reacting the isocyanate compound (b1) and a hydrazine to obtained the semicarbazide compound (B1).

In the production method of the present embodiment, it is preferable that the isocyanate compound (a1) is an isocyanate compound having at least one cyclic structure within the molecule, and the isocyanate compound (b1) is an isocyanate compound not having a cyclic structure within the molecule.

In the production method of the present embodiment, including step 1-2 after step 1-1 has the effect of suppressing residual unreacted hydrazine. It is thought that because the isocyanate compound (b1) has no cyclic structure, steric hindrance due to the molecular skeleton is minor, meaning the reactivity with the hydrazine is excellent. Accordingly, the pH of the obtained composition can be maintained in the neutral region, and hydrolysis of the synthesized semicarbazide compounds can be better suppressed.

Furthermore, in the production method of the present embodiment, by including step 1-2 after step 1-1, the reactivity between the semicarbazide group of the semicarbazide compound (A1) obtained in step 1-1 and the isocyanate group of the isocyanate compound (b1) used in step 1-2 is low, and therefore multimerization and gelling of the semicarbazide compounds can be suppressed.

For these reasons, using the production method of the present embodiment enables more favorable storage stability for the obtained semicarbazide composition.

In the production method of the present embodiment, an arbitrary solvent may be used, but selecting a solvent that exhibits high solubility of both the isocyanate compounds, including the isocyanate compound (a1) and the isocyanate compound (b1), and the hydrazine is difficult. Accordingly, in the production method of the present embodiment, a combination of two or more solvents is preferably used.

Specific examples of solvents for dissolving the hydrazine include water, methanol, ethanol, isopropanol, tetrahydrofuran and diethyl ether. One of these solvents may be used alone, or a combination of two or more solvents may be used. Among these solvents, from the viewpoints of providing favorable hydrazine dispersibility, improving the reactivity between the isocyanate compounds and the hydrazine, and also having a high specific heat, meaning the temperature during production can be more easily stabilized and providing better control of excess reaction caused by exothermic reactions, namely better control of multimerization of the semicarbazide compounds, the solvent for dissolving the hydrazine preferably contains water.

Specific examples of solvents for dissolving each of the isocyanate compounds include chloroform, dichloroethane, toluene, xylene, tetrahydrofuran, cyclohexane, hexane, heptane, carbon disulfide and butyl acetate. One of these solvents may be used alone, or a combination of two or more solvents may be used. Among these solvents, in terms of providing superior solubility of the isocyanate compounds, tetrahydrofuran, cyclohexane or toluene is preferred as the solvent for dissolving each of the isocyanate compounds.

The reaction temperature of the reactions between each of the isocyanate compounds and the hydrazine in step 1-1 and step 1-2 is preferably 25°C or lower. By ensuring that the reaction temperature is not higher than the above upper limit, the reaction rate can be suppressed to an appropriate level, and the amount of multimers formed as a result of side reactions between a semicarbazide group and an isocyanate group, or side reactions between an isocyanate group and an amine group can be more effectively reduced.

There are no particular limitations on the lower limit for the reaction temperature, provided the solvent does not solidify, but a temperature of 5°C is preferred, and 8°C is more preferred. By ensuring that the reaction temperature is at least a high as this lower limit, the reactivity between each of the isocyanate compounds and the hydrazine can be improved.

In the reaction process, following completion of the reaction between each of the isocyanate compounds and the hydrazine, the target semicarbazide composition can be obtained by a step of extracting the semicarbazide compounds from the reaction liquid, or a step of separating the solvent containing the semicarbazide compounds or the like. In particular, in order to more effectively suppress the amount of multimers in the semicarbazide composition, the reaction process preferably does not include a step of obtaining a solid of the semicarbazide compounds via an operation such as distillation under reduced pressure. Further, in order to purify the obtained semicarbazide composition and remove multimers and the hydrazine and organic solvent, operations such as column chromatography, distillation under reduced pressure and activated carbon treatment may be conducted as required. In such cases, these operations are preferably conducted at room temperature or lower, because this enables suppression of excessive degradation of the semicarbazide compounds.

<Second Embodiment>

A method for producing a semicarbazide composition according to a second embodiment of the present invention (hereafter sometimes referred to as simply "the production method of the present embodiment") includes the following step 2-1 and step 2-2 in that sequence.

Namely, a step 2-1 of reacting the isocyanate compound (a2) and a hydrazine to obtain the semicarbazide compound (A2); and

a step 2-2 of reacting the isocyanate compound (b2) and a hydrazine to obtained the semicarbazide compound (B2).

In the production method of the present embodiment, including step 2-2 after step 2-1 has the effect of suppressing residual unreacted hydrazine. It is thought that because the isocyanate compound (b2) has no cyclic structure, steric hindrance due to the molecular skeleton is minor, meaning the reactivity with the hydrazine is excellent.

Furthermore, in the production method of the present embodiment, by including step 2-2 after step 2-1, the reactivity between the semicarbazide group of the semicarbazide compound (A2) obtained in step 2-1 and the isocyanate group of the isocyanate compound (b2) used in step 2-2 is low, and therefore multimerization and gelling of the semicarbazide compounds can be suppressed.

In the production method of the present embodiment, an arbitrary solvent may be used, but selecting a solvent that exhibits high solubility of both the isocyanate compounds, including the isocyanate compound (a2) and the isocyanate compound (b2), and the hydrazine is difficult. Accordingly, in the production method of the present embodiment, a combination of two or more solvents is preferably used.

Specific examples of solvents for dissolving the hydrazine include water, methanol, ethanol, isopropanol, tetrahydrofuran and diethyl ether. One of these solvents may be used alone, or a combination of two or more solvents may be used. Among these solvents, from the viewpoints of providing favorable hydrazine dispersibility, improving the reactivity between the isocyanate compounds and the hydrazine, and also having a high specific heat, meaning the temperature during production can be more easily stabilized and providing better control of excess reaction caused by exothermic reactions, namely better control of multimerization of the semicarbazide compounds, the solvent for dissolving the hydrazine preferably contains water.

Specific examples of solvents for dissolving each of the isocyanate compounds include chloroform, dichloroethane, toluene, xylene, tetrahydrofuran, cyclohexane, hexane, heptane, carbon disulfide and butyl acetate. One of these solvents may be used alone, or a combination of two or more solvents may be used. Among these solvents, in terms of providing superior solubility of the isocyanate compounds, tetrahydrofuran, cyclohexane or toluene is preferred as the solvent for dissolving each of the isocyanate compounds.

The reaction temperature of the reactions between each of the isocyanate compounds and the hydrazine in step 2-1 and step 2-2 is preferably 25°C or lower. By ensuring that the reaction temperature is not higher than the above upper limit, the reaction rate can be suppressed to an appropriate level, and the amount of multimers formed as a result of side reactions between a semicarbazide group and an isocyanate group, or side reactions between an isocyanate group and an amine group can be more effectively reduced.

There are no particular limitations on the lower limit for the reaction temperature, provided the solvent does not solidify, but a temperature of 5°C is preferred, and 8°C is more preferred. By ensuring that the reaction temperature is at least a high as this lower limit, the reactivity between each of the isocyanate compounds and the hydrazine can be improved.

In the reaction process, following completion of the reaction between each of the isocyanate compounds and the hydrazine, the target semicarbazide composition can be obtained by a step of extracting the semicarbazide compounds from the reaction liquid, or a step of separating the solvent containing the semicarbazide compounds or the like. In particular, in order to more effectively suppress the amount of multimers in the semicarbazide composition, the reaction process preferably does not include a step of obtaining a solid of the semicarbazide compounds via an operation such as distillation under reduced pressure. Further, in order to purify the obtained semicarbazide composition and remove multimers and the hydrazine and organic solvent, operations such as column chromatography, distillation under reduced pressure and activated carbon treatment may be conducted as required. In such cases, these operations are preferably conducted at room temperature or lower, because this enables suppression of excessive degradation of the semicarbazide compounds.

<<Water-Based Coating Composition>>

A water-based coating composition of an embodiment of the present invention contains the semicarbazide composition according to the first embodiment or second embodiment described above, and a carbonyl group-containing resin (C).

In the water-based coating composition of the present embodiment, the content ratio between the semicarbazide composition and the carbonyl group-containing resin (C) (hereafter sometimes referred to as simply "the resin (C)") may be adjusted as appropriate, but in terms of achieving a favorable curability and a good balance between the physical properties of the obtained coating film, blending is preferably performed so that the ratio of the number of moles of semicarbazide groups relative to the number of moles of carbonyl groups is at least 0.5 but not more than 1.5.

<Carbonyl Group-Containing resin (C)>

The carbonyl group-containing resin (C) is a water-soluble or water-dispersible resin having two or more aldehyde groups or keto groups within the skeleton of a single molecule. Examples of the resin (C) include conventionally known polycarbonyl compounds such as polyurethane-based polymers, polyester-based polymers, poly(meth)acrylate-based polymers, polyvinyl acetate-based polymers, polybutadiene-based polymers, polyvinyl chloride-based polymers, polypropylene chloride-based polymers, polyethylene-based polymers, fluorine-based polymers, polystyrene-based polymers, polystyrene-(meth)acrylate-based copolymers, rosin-based polymers, styrenemaleic anhydride copolymers and alcohol adducts thereof, and cellulose-based resins. One of these polycarbonyl compounds may be used alone, or a combination of two or more such compounds may be used.

The resin (C) can be obtained by subjecting a polymerizable monomer having at least one aldehyde group or keto group within the molecule to either copolymerization with another monomer or addition polymerization. It is thought that, following the polymerization reaction, the aldehyde groups and keto groups contribute to crosslinking reactions in the form of carbonyl groups.

Specific examples of the polymerizable monomer having at least one aldehyde group or keto group within the molecule include acetone dicarboxylic acid, dihydroxyacetone, monohydroxyacetone, dihydroxybenzaldehyde, and ethylenic unsaturated monomers having at least one aldehyde group or keto group within the molecule. The resin (C) can be obtained by conducting an additional polymerization with one of these monomers, or with a combination of two or more such monomers.

Specific examples of the ethylenic unsaturated monomers having at least one aldehyde group or keto group within the molecule include acrolein, diacetone acrylamide, diacetone methacrylamide, formylstyrol, vinyl methyl ketone, vinyl ethyl ketone, vinyl isobutyl ketone, acryloxyalkylpropanals, methacryloxyalkylpropanals, diacetone acrylate, diacetone methacrylate, acetonyl acrylate, 2-hydroxypropyl acrylate acetyl acetate, and butanediol-1,4-acrylate acetyl acetate. The resin (C), namely a polycarbonyl compound, can be obtained by copolymerizing an ethylenic unsaturated monomer mixture containing either one, or two or more, of these monomers, and another ethylenic unsaturated monomer. However, it should be noted that the expression "ethylenic unsaturated monomers having at least one aldehyde group or keto group within the molecule" excludes ethylenic unsaturated monomers containing a carbonyl group of a carboxylic acid or ester.

Moreover, in addition to bonds that undergo a crosslinking reaction with a semicarbazide group, the resin (C) may also contain functional groups that undergo crosslinking reactions with other functional groups. Examples of the crosslinked structures formed by these types of crosslinking reactions include siloxane crosslinks formed by silanol condensation, urethane crosslinks formed from a hydroxyl group and an isocyanate group, crosslinks formed from a hydroxyl group and melamine, amide ester crosslinks formed from an oxazoline and a carboxyl group, acyl urea crosslinks formed from a carboxyl group and a carbodiimide group, and crosslinks formed from a carboxyl group or amino group and an epoxy group.

Specific examples of monomers having a crosslinkable functional group include $\gamma$-(meth)acryloxypropyltrimethoxysilane, vinylmethyldiethyoxysilane, vinylmethyldimethyoxysilane, vinyldimethylethyoxysilane, vinyldimethylmethyoxysilane, vinyltrimethoxysilane, vinyltriethoxysilane, 2-hydroxyethyl (meth)acrylate, 2-hydroxypropyl (meth)acrylate, ethylene glycol (meth)acrylate, ethylene glycol methoxy(meth)acrylate, diethylene glycol (meth)acrylate, diethylene glycol methoxy(meth)acrylate, tetraethylene glycol (meth)acrylate, tetraethylene glycol methoxy(meth)acrylate, (poly)oxypropylene (meth)acrylate, propylene glycol (meth)acrylate, propylene glycol methoxy(meth)acrylate, dipropylene glycol (meth)acrylate, dipropylene glycol methoxy(meth)acrylate, tetrapropylene glycol (meth)acrylate, tetrapropylene glycol methoxy(meth)acrylate, 2-hydroxycyclohexyl (meth)acrylate, acrylic acid, methacrylic acid, itaconic acid, glycidyl (meth)acrylate, allyl glycidyl ether, glycidyl cinnamate, glycidyl crotonate, glycidyl itaconate, glycidyl norbornenyl ester, and glycidyl norbornenyl ether. One of these compounds may be used alone, or a combination of two or more compounds may be used.

In the polymerizable monomer mixture used in the production of the resin (C), the amount of the polymerizable monomer having at least one aldehyde group or keto group within the molecule, relative to the total mass of the polymerizable monomer mixture, is preferably at least 1.0% by mass, and more preferably at least 1.0% by mass but not more than 30% by mass.

In other words, the amount of carbonyl group-containing polymerizable monomer units in the resin (C), relative to the total mass of polymerizable monomer units, is preferably at least 1.0% by mass, and more preferably at least 1.0% by mass but not more than 30% by mass.

Provided that the amount of the polymerizable monomer having an aldehyde group or keto group within the polymerizable monomer mixture (the amount of carbonyl group-containing polymerizable monomer units in the resin (C)) is at least as large as the above lower limit, the number of crosslinking points increases, and the performance when formed as a coating film improves. On the other hand, provided that the amount of the polymerizable monomer having an aldehyde group or keto group within the polymerizable monomer mixture (the amount of carbonyl group-containing polymerizable monomer units in the resin (C)) is not more than the above upper limit, the molecular weight and glass transition temperature (Tg) and the like of the resin (C) can be more easily modified with the other polymerizable monomer components.

[Method for Producing Resin (C) Having Carbonyl Group]

The carbonyl group-containing resin (C) can be produced using known methods, but in terms of facilitating control of various physical properties such as the particle size and molecular weight, the resin (C) is preferably produced by emulsion polymerization, mini-emulsion polymerization or solution polymerization.

<Other Constituent Components>

The water-based coating composition of the present embodiment may also contain other components in addition to the semicarbazide composition described above and the carbonyl group-containing resin (C), provided these other components do not impair the effects of the present invention, and examples of these other components include curing agents other than semicarbazide groups and synthetic resins that crosslink with such other curing agents, as well as emulsion particles, antifoaming agents, colorants, thickeners, thixotropic agents, freeze stabilizers, matting agents, crosslinking reaction catalysts, pigments, curing catalysts, crosslinking agents, fillers, antiskinning agents, dispersants, humectants, photostabilizers, antioxidants, ultraviolet absorbers, rheology control agents, antifoaming agents, film formation assistants, rust inhibitors, dyes, plasticizers, lubricants, reducing agents, preservatives, antifungal agents, deodorizing agents, anti-yellowing agents, antistatic agents and charge modifiers. Examples of curing agents other than semicarbazide compounds include isocyanates, blocked isocyanates, carbodiimides, oxazoline, melamine, and silane coupling agents.

<<Coating Film>>

A coating film of an embodiment of the present invention is obtained by curing the water-based coating composition described above, and has excellent water resistance and hardness.

In a method for forming the coating film, the water-based coating composition described above is applied to a substrate or coating film using a conventional method, and by subsequently drying the composition and evaporating the water, the reaction between the semicarbazide group and carbonyl group is promoted, yielding a cured coating film. The curing temperature conditions may, for example, be normal temperature of about 23°C, may involve low-temperature baking of at least 70°C but not more than 80°C, or may involve high-temperature baking of at least 120°C but not more than 140°C. Further, the heating time may be a short time period of at least 5 minutes but not more than about 10 minutes, or may involve heating for at least one hour, or two hours or longer.

<<Article>>

An article of an embodiment of the present invention includes the coating film described above, and has excellent water resistance and hardness.

Specifically, an article of the present embodiment contains the coating film described above formed on a coating target object. Further, the article may also include, between the coating target object and the coating film, a layer or coating layer obtained by curing another coating material.

Examples of the material of the coating target object include non-metallic inorganic materials, metals, polymer compounds, synthetic rubbers, natural rubbers, fibers and wooden materials. Examples of the non-metallic inorganic materials include glass, gypsum and stone. Examples of the metals include iron, stainless steel, aluminum and copper. Examples of the polymer compounds include acrylics, polystyrenes, polyesters, polycarbonates and polyolefins. Examples of the fibers include cotton, silk, linen and nylon.

EXAMPLES

The present invention is described below in further detail using the following production examples, examples and comparative examples, but these examples in no way limit the scope of the present invention. Unless specifically stated otherwise, the weight values for each of the raw materials used in the following production examples and examples all indicate parts by mass.

<Methods for Evaluating Coating Films>

Methods for evaluating the coating films produced using the water-based coating compositions obtained in the examples and comparative examples were conducted using the methods described below.

[Evaluation 1]

(Storage Stability)

Water was added to the semicarbazide composition obtained in each example and comparative example to prepare an aqueous solution having a solid fraction content of 50% by mass, and the solution was left to stand at 50°C for two weeks. After two weeks, the pH was measured, and the storage stability was evaluated against the following evaluation criteria.

(Evaluation Criteria)

Good: pH of 8.5 or lower
Acceptable: pH of at least 8.6 but not more than 8.8
Poor: pH exceeding 8.8

[Evaluation 2]

(Solubility and Dispersibility in Coating Materials)

One gram of the semicarbazide composition obtained in each example and comparative example was added to 10 g of water and stirred with a stirrer. The stirred solution was then inspected, and the solubility and dispersibility in coating materials was evaluated against the following evaluation criteria.

(Evaluation Criteria)

O: the composition dissolved or dispersed within one minute
Δ: the composition dissolved or dispersed in a time exceeding 1 minute but less than 5 minutes
×: the composition dissolved or dispersed in a time exceeding 5 minutes, or a sediment remained visible

[Evaluation 3]

(Short-Term Curability)

The water-based coating composition obtained in each example and comparative example was coated onto a polypropylene (PP) sheet with an applicator in an amount sufficient to form a resin film thickness of 40 μm. Following application, the PP sheet was dried at a temperature of 23°C and a humidity of 50% for 24 hours. Subsequently, the coating film was peeled from the PP sheet in the form of a film, and the residual film ratio (gel fraction) upon immersion of the peeled coating film in acetone at 23°C for 24 hours was measured. The curability was evaluated against the following evaluation criteria.

(Evaluation Criteria)

O: gel fraction of 88% by mass or higher
Δ: gel fraction of at least 83% by mass but less than 88% by mass
×: gel fraction of less than 83% by mass

[Evaluation 4]

(Water Resistance)

The water-based coating composition obtained in each example and comparative example was coated onto a glass plate with an applicator in an amount sufficient to form a resin film thickness of 40 μm. Following application, the glass plate was dried at a temperature of 23°C and a humidity of 50% for 24 hours. A rubber ring with a diameter of 2 cm was placed on the obtained coating film, and water was dripped into the inside of the ring. A watch glass was placed on top of the ring to prevent volatilization, and the structure was left to stand at 23°C for one day. After one day, the rubber and ring and water were removed, and the state of the coating film was inspected visually, with the water resistance being evaluated against the following evaluation criteria.

(Evaluation Criteria)

O: almost no blister formation, and the coating film remained transparent
Δ: slight blister formation
×: formation of multiple blisters, or whitening of the coating film

[Evaluation 5]

(Koenig Hardness)

The water-based coating composition obtained in each example and comparative example was coated onto a glass plate with an applicator in an amount sufficient to form a resin film thickness of 40 μm. Following application, the glass plate was dried at a temperature of 23°C and a humidity of 50% for 24 hours. The Koenig hardness of the obtained coating film was measured at 23°C using a pendulum hardness meter manufactured by BYK Chemie GmbH. The hardness was evaluated against the following evaluation criteria.

(Evaluation Criteria)

O: Koenig hardness of 25 or higher
Δ: Koenig hardness of at least 20 but less than 25
×: Koenig hardness of less than 20

[Evaluation 6]

(Transparency)

The water-based coating composition obtained in each example and comparative example was coated onto a glass plate with an applicator in an amount sufficient to form a resin film thickness of 40 μm. Following application, the glass plate was dried at a temperature of 23°C and a humidity of 50% for 24 hours. The haze of the obtained coating film was measured using a direct readout haze computer HGM-2DP (product name) manufactured by Suga Test Instruments Co., Ltd., and the transparency of the coating film was evaluated against the following evaluation criteria.

(Evaluation Criteria)

good: haze of less than 2.0
poor: haze of 2.0 or greater

<Production of Carbonyl Group-Containing Resins (C)>

[Production Example 1]

(Production of Carbonyl Group-Containing Resin C-1)

A reactor fitted with a reflux condenser, a dropping funnel, a thermometer and a stirring device was charged with 514.5 g of ion-exchanged water and 12.0 g of an aqueous solution containing 30% by mass of a surfactant (product name: Newcol 707SF, manufactured by Nippon Nyukazai Co., Ltd., an anionic surfactant, non-volatile fraction: 30% by mass). Subsequently, the temperature inside the reactor was raised to 80°C, and a mixture containing 12.6 g of methacrylic acid, 5.4 g of acrylic acid, 334.8 g of butyl acrylate, 54.0 g of diacetone acrylamide, 423 g of methyl methacrylate, 70.2 g of butyl methacrylate, 9.0 g of dodecylmercaptan, 456 g of ion-exchanged water, 30 g of Newcol 707SF, 4.5 g of Spinomar NaSS (manufactured by Tosoh Finechem Corporation, sodium p-styrenesulfonate) and 1.2 g of ammonium persulfate was added dropwise from the dropping funnel to the reactor over a period of 3 hours. During the addition, the temperature inside the reactor was maintained at 80°C. Following the dropwise addition, the temperature inside the reactor was held at 80°C for one hour and 30 minutes. Subsequently, the reaction liquid was cooled to room temperature, and a 25% by mass aqueous solution of ammonia was added to adjust the pH to 9.0. The pH-adjusted solution was then filtered through a 100-mesh wire screen, and an appropriate amount of ion-exchanged water was added to obtain a carbonyl group-containing resin C-1. In the thus obtained carbonyl group-containing resin C-1, the solid fraction was 40.0% by mass, and the average particle size was 110 nm. The average particle size was deemed to be the volume average particle size measured using a laser diffraction particle size distribution meter UPA EX-150 (manufactured by MicrotracBEL Corporation).

[Production Example 2]

(Production of Carbonyl Group-Containing Resin C-2)

A reactor fitted with a reflux condenser, a dropping funnel, a thermometer and a stirring device was charged with 514.5 g of ion-exchanged water and 12.0 g of an aqueous solution containing 30% by mass of a surfactant (product name: Newcol 707SF, manufactured by Nippon Nyukazai Co., Ltd., an anionic surfactant, non-volatile fraction: 30% by mass). Subsequently, the temperature inside the reactor was raised to 80°C, and a mixture containing 12.6 g of methacrylic acid, 5.4 g of acrylic acid, 433.8 g of butyl acrylate, 100.8 g of diacetone acrylamide, 337.5 g of methyl methacrylate, 70.2 g of butyl methacrylate, 9.0 g of dodecylmercaptan, 456 g of ion-exchanged water, 30 g of Newcol 707SF, 4.5 g of Spinomar NaSS (manufactured by Tosoh Finechem Corporation, sodium p-styrenesulfonate) and 1.2 g of ammonium persulfate was added dropwise from the dropping funnel to the reactor over a period of 3 hours. During the addition, the temperature inside the reactor was maintained at 80°C. Following the dropwise addition, the temperature inside the reactor was held at 80°C for one hour and 30 minutes. Subsequently, the reaction liquid was cooled to room temperature, and a 25% by mass aqueous solution of ammonia was added to adjust the pH to 9.0. The pH-adjusted solution was then filtered through a 100-mesh wire screen, and an appropriate amount of ion-exchanged water was added to obtain a carbonyl group-containing resin C-2. In the thus obtained carbonyl group-containing resin C-2, the solid fraction was 40.0% by mass, and the average particle size was 114 nm. The average particle size was deemed to be the volume average particle size measured using a laser diffraction particle size distribution meter UPA EX-150 (manufactured by MicrotracBEL Corporation).

[Production Example 3]

(Production of Carbonyl Group-Containing Resin C-3)

A reactor fitted with a reflux condenser, a dropping funnel, a thermometer and a stirring device was charged with 514.5 g of ion-exchanged water and 12.0 g of an aqueous solution containing 30% by mass of a surfactant (product name: Newcol 707SF, manufactured by Nippon Nyukazai Co., Ltd., an anionic surfactant, non-volatile fraction: 30% by mass). Subsequently, the temperature inside the reactor was raised to 80°C, and a mixture containing 12.6 g of methacrylic acid, 5.4 g of acrylic acid, 424.8 g of butyl acrylate, 162.0 g of diacetone acrylamide, 225.0 g of methyl methacrylate, 70.2 g of butyl methacrylate, 9.0 g of dodecylmercaptan, 456 g of ion-exchanged water, 30 g of Newcol 707SF, 4.5 g of Spinomar NaSS (manufactured by Tosoh Finechem Corporation, sodium p-styrenesulfonate) and 1.2 g of ammonium persulfate was added dropwise from the dropping funnel to the reactor over a period of 3 hours. During the addition, the temperature inside the reactor was maintained at 80°C. Following the dropwise addition, the temperature inside the reactor was held at 80°C for one hour and 30 minutes. Subsequently, the reaction liquid was cooled to room temperature, and a 25% by mass aqueous solution of ammonia was added to adjust the pH to 9.0. The pH-adjusted solution was then filtered through a 100-mesh wire screen, and an appropriate amount of ion-exchanged water was added to obtain a carbonyl group-containing resin C-3. In the thus obtained carbonyl group-containing resin C-3, the solid fraction was 40.0% by mass, and the average particle size was 114 nm. The average particle size was deemed to be the volume average particle size measured using a laser diffraction particle size distribution meter UPA EX-150 (manufactured by MicrotracBEL Corporation).

[Production Example 4]

(Production of Carbonyl Group-Containing Resin C-4)

A reactor fitted with a reflux condenser, a dropping funnel, a thermometer and a stirring device was charged with 514.5 g of ion-exchanged water and 12.0 g of an aqueous solution containing 30% by mass of a surfactant (product name: Newcol 707SF, manufactured by Nippon Nyukazai Co., Ltd., an anionic surfactant, non-volatile fraction: 30% by mass). Subsequently, the temperature inside the reactor was raised to 80°C, and a mixture containing 12.6 g of methacrylic acid, 5.4 g of acrylic acid, 442.8 g of butyl acrylate, 54.0 g of diacetone acrylamide, 315.0 g of methyl methacrylate, 70.2 g of butyl methacrylate, 9.0 g of dodecylmercaptan, 456 g of ion-exchanged water, 30 g of Newcol 707SF, 4.5 g of Spinomar NaSS (manufactured by Tosoh Finechem Corporation, sodium p-styrenesulfonate) and 1.2 g of ammonium persulfate was added dropwise from the dropping funnel to the reactor over a period of 3 hours. During the addition, the temperature inside the reactor was maintained at 80°C. Following the dropwise addition, the temperature inside the reactor was held at 80°C for one hour and 30 minutes. Subsequently, the reaction liquid was cooled to room temperature, and a 25% by mass aqueous solution of ammonia was added to adjust the pH to 9.0. The pH-adjusted solution was then filtered through a 100-mesh wire screen, and an appropriate amount of ion-exchanged water was added to obtain a carbonyl group-containing resin C-4. In the thus obtained carbonyl group-containing resin C-4, the solid fraction was 40.0% by mass, and the average particle size was 111 nm. The average particle size was deemed to be the volume average particle size measured using a laser diffraction particle size distribution meter UPA EX-150 (manufactured by MicrotracBEL Corporation).

[Production Example 5]

(Production of Hydroxyl Group-Containing Resin OHEm)

A reactor fitted with a reflux condenser, a dropping funnel, a thermometer and a stirring device was charged with 514.5 g of ion-exchanged water and 12.0 g of an aqueous solution containing 30% by mass of a surfactant (product name: Newcol 707SF, manufactured by Nippon Nyukazai Co., Ltd., an anionic surfactant, non-volatile fraction: 30% by mass). Subsequently, the temperature inside the reactor was raised to 80°C, and a mixture containing 18 g of methacrylic acid, 425.3 g of butyl acrylate, 125.6 g of hydroxyethyl methacrylate, 261.0 g of methyl methacrylate, 70.2 g of butyl methacrylate, 9.0 g of dodecylmercaptan, 456 g of ion-exchanged water, 30 g of Newcol 707SF and 1.2 g of ammonium persulfate was added dropwise from the dropping funnel to the reactor over a period of 3 hours. During the addition, the temperature inside the reactor was maintained at 80°C. Following the dropwise addition, the temperature inside the reactor was held at 80°C for one hour and 30 minutes. Subsequently, the reaction liquid was cooled to room temperature, and a 25% by mass aqueous solution of ammonia was added to adjust the pH to 9.0. The pH-adjusted solution was then filtered through a 100-mesh wire screen, and an appropriate amount of ion-exchanged water was added to obtain a hydroxyl group-containing resin OHEm. In the thus obtained hydroxyl group-containing resin OHEm, the solid fraction was 40.0% by mass, and the average particle size was 115 nm. The average particle size was deemed to be the volume average particle size measured using a laser diffraction particle size distribution meter UPA EX-150 (manufactured by MicrotracBEL Corporation).

<Production of Semicarbazide Compositions>

[Example 1]

(Production of Semicarbazide Composition S-a1)

A 2 L reactor fitted with a reflux condenser, a dropping funnel, a thermometer and a stirring device was charged with 40 g of ion-exchanged water, 100 g of isopropanol and 42.7 g of hydrazine monohydrate while the reactor was flushed with nitrogen at 1 L/minute, and the contents of the reactor were then stirred while the temperature inside the reactor was maintained at 25°C. Subsequently, a mixture containing 381 g of toluene and 100 g of isophorone diisocyanate (IPDI) was added dropwise over a period of 3 hours, and following completion of the dropwise addition, stirring was continued for 30 minutes with the temperature maintained at 25°C. Next, a mixture containing 14.4 g of toluene and 0.5 g of 1,6-hexamethylene diisocyanate (HDI) was added dropwise over a period of 10 minutes, and following completion of the dropwise addition, stirring was continued for 20 minutes. Subsequently, the obtained solution was transferred to a separating funnel, 80 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a1.

[Example 2]

(Production of Semicarbazide Composition S-a2)

A 2 L reactor fitted with a reflux condenser, a dropping funnel, a thermometer and a stirring device was charged with 40 g of ion-exchanged water, 100 g of isopropanol and 42.7 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of isophorone diisocyanate was added dropwise over a period of 3 hours, and following completion of the dropwise addition, stirring was continued for 30 minutes with the temperature maintained at 20°C. Next, a mixture containing 14.4 g of toluene and 1.1 g of 1,6-hexamethylene diisocyanate was added dropwise over a period of 10 minutes, and following completion of the dropwise addition, stirring was continued for 20 minutes. Subsequently, the obtained solution was transferred to a separating funnel, 80 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a2.

[Example 3]

(Production of Semicarbazide Composition S-a3)

A 2 L reactor fitted with a reflux condenser, a dropping funnel, a thermometer and a stirring device was charged with 128.8 g of ion-exchanged water and 42.7 g of hydrazine monohydrate while the reactor was flushed with nitrogen at 1 L/minute, and the contents of the reactor were then stirred while the temperature inside the reactor was maintained at 10°C. Subsequently, a mixture containing 381 g of cyclohexane and 100 g of isophorone diisocyanate was added dropwise over a period of 3 hours while stirring was continued, and stirring was then continued for 30 minutes with the temperature maintained at 10°C. Next, a mixture containing 14.4 g of cyclohexane and 3.8 g of 1,6-hexamethylene diisocyanate was added dropwise over a period of 10 minutes, and following completion of the dropwise addition, stirring was continued for 20 minutes. The obtained solution was then transferred to a separating funnel, and after leaving to stand overnight, the lower-phase aqueous solution of the two separated phases was collected, thus obtaining a semicarbazide composition S-a3.

[Example 4]

(Production of Semicarbazide Composition S-a4)

A 2 L reactor fitted with a reflux condenser, a dropping funnel, a thermometer and a stirring device was charged with 90 g of ion-exchanged water, 50 g of isopropanol and 42.7 g of hydrazine monohydrate while the reactor was flushed with nitrogen at 1 L/minute, and the contents of the reactor were then stirred while the temperature inside the reactor was maintained at 20°C. Subsequently, a mixture containing 381 g of cyclohexane and 100 g of isophorone diisocyanate was added dropwise over a period of 3 hours, and following completion of the dropwise addition, stirring was continued for 30 minutes with the temperature maintained at 20°C. Next, a mixture containing 14.4 g of cyclohexane and 11.2 g of 1,6-hexamethylene diisocyanate was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a4.

[Example 5]

(Production of Semicarbazide Composition S-a5)

A 2 L reactor fitted with a reflux condenser, a dropping funnel, a thermometer and a stirring device was charged with 90 g of ion-exchanged water, 50 g of isopropanol and 42.7 g of hydrazine monohydrate while the reactor was flushed with nitrogen at 1 L/minute, and the contents of the reactor were then stirred while the temperature inside the reactor was maintained at 5°C. Subsequently, a mixture containing 381 g of cyclohexane and 100 g of isophorone diisocyanate was added dropwise over a period of 3 hours, and following completion of the dropwise addition, stirring was continued for 30 minutes with the temperature maintained at 5°C. Next, a mixture containing 14.4 g of cyclohexane and 14.4 g of 1,6-hexamethylene diisocyanate was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a5.

[Example 6]

(Production of Semicarbazide Composition S-a6)

A 2 L reactor fitted with a reflux condenser, a dropping funnel, a thermometer and a stirring device was charged with 110 g of ion-exchanged water, 30 g of tetrahydrofuran and 42.7 g of hydrazine monohydrate while the reactor was flushed with nitrogen at 1 L/minute, and the contents of the reactor were then stirred while the temperature inside the reactor was maintained at 20°C. Subsequently, a mixture containing 381 g of cyclohexane and 100 g of isophorone diisocyanate was added dropwise over a period of 3 hours, and following completion of the dropwise addition, stirring was continued for 30 minutes with the temperature maintained at 20°C. Next, a mixture containing 14.4 g of cyclohexane and 6.3 g of 1,5-pentamethylene diisocyanate (PDI) was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual tetrahydrofuran in the aqueous solution was then removed by distillation under reduced pressure at room temperature. An appropriate amount of ion-exchanged water was then added to adjust the solid fraction to 50% by mass, thus obtaining a semicarbazide composition S-a6.

[Example 7]

(Production of Semicarbazide Composition S-a7)

A 2 L reactor fitted with a reflux condenser, a dropping funnel, a thermometer and a stirring device was charged with 128.8 g of ion-exchanged water and 42.7 g of hydrazine monohydrate while the reactor was flushed with nitrogen at 1 L/minute, and the contents of the reactor were then stirred while the temperature inside the reactor was maintained at 10°C. Subsequently, a mixture containing 381 g of toluene and 100 g of isophorone diisocyanate was added dropwise over a period of 3 hours while stirring was continued, and stirring was then continued for 30 minutes with the temperature maintained at 10°C. Next, a mixture containing 14.4 g of toluene and 4.0 g of 4-isocyanatomethyl-1,8-octamethylene diisocyanate (TTI) was added dropwise over a period of 10 minutes, and following completion of the dropwise addition, stirring was continued for 20 minutes. Subsequently, the obtained solution was transferred to a separating funnel, and after leaving to stand overnight, the lower-phase aqueous solution of the two separated phases was collected, thus obtaining a semicarbazide composition S-a7.

[Example 8]

(Production of Semicarbazide Composition S-a8)

A 2 L reactor fitted with a reflux condenser, a dropping funnel, a thermometer and a stirring device was charged with 110 g of ion-exchanged water, 30 g of tetrahydrofuran and 42.7 g of hydrazine monohydrate while the reactor was flushed with nitrogen at 1 L/minute, and the contents of the reactor were then stirred while the temperature inside the reactor was maintained at 10°C. Subsequently, a mixture containing 381 g of cyclohexane and 100 g of isophorone diisocyanate was added dropwise over a period of 3 hours, and following completion of the dropwise addition, stirring was continued for 30 minutes with the temperature maintained at 10°C. Next, a mixture containing 14.4 g of cyclohexane and 8.3 g of lysine ester triisocyanate (LTI) was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual tetrahydrofuran in the aqueous solution was then removed by distillation under reduced pressure at room temperature. An appropriate amount of ion-exchanged water was then added to adjust the solid fraction to 50% by mass, thus obtaining a semicarbazide composition S-a8.

[Example 9]

(Production of Semicarbazide Composition S-a9)

A 2 L reactor fitted with a reflux condenser, a dropping funnel, a thermometer and a stirring device was charged with 40 g of ion-exchanged water, 100 g of isopropanol and 42.7 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of isophorone diisocyanate was added dropwise over a period of 3 hours, and following completion of the dropwise addition, stirring was continued for 30 minutes with the temperature maintained at 20°C. Next, a mixture containing 14 g of toluene and 3 g of an HDI-based biuret polyisocyanate (hereafter sometimes referred to as "24A") manufactured by Asahi Kasei Corporation was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a9.

[Example 10]

(Production of Semicarbazide Composition S-a10)

A 2 L reactor fitted with a reflux condenser, a dropping funnel, a thermometer and a stirring device was charged with 40 g of ion-exchanged water, 50 g of methanol and 19.8 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of an HDI-based isocyanurate polyisocyanate (hereafter sometimes referred to as "WT31") manufactured by Asahi Kasei Corporation was added dropwise over a period of 3 hours, and following completion of the dropwise addition, stirring was continued for 30 minutes with the temperature maintained at 20°C. Next, a mixture containing 14.4 g of toluene and 3 g of 24A was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual methanol in the aqueous solution was then removed by distillation under reduced pressure at room temperature. An appropriate amount of ion-exchanged water was then added to adjust the solid fraction to 50% by mass, thus obtaining a semicarbazide composition S-a10.

[Example 11]

(Production of Semicarbazide Composition S-a11)

A 2 L reactor fitted with a reflux condenser, a dropping funnel, a thermometer and a stirring device was charged with 10 g of ion-exchanged water, 160 g of methanol and 51.4 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of xylylene diisocyanate (XDI) was added dropwise over a period of 3 hours, and following completion of the dropwise addition, stirring was continued for 30 minutes with the temperature maintained at 20°C. Next, a mixture containing 14.4 g of cyclohexane and 6 g of HDI was added dropwise over a period of 10 minutes, and following completion of the dropwise addition, stirring was continued for 20 minutes. Subsequently, the obtained solution was transferred to a separating funnel, 50 g of ion-exchanged water was added, and an extraction operation was performed. Residual methanol in the aqueous solution was then removed by distillation under reduced pressure at room temperature. An appropriate amount of ion-exchanged water was then added to adjust the solid fraction to 50% by mass, thus obtaining a semicarbazide composition S-a11.

[Example 12]

(Production of Semicarbazide Composition S-a12)

A 2 L reactor fitted with a reflux condenser, a dropping funnel, a thermometer and a stirring device was charged with 10 g of ion-exchanged water, 160 g of methanol and 51.1 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of xylylene diisocyanate (XDI) was added dropwise over a period of 3 hours, and following completion of the dropwise addition, stirring was continued for 30 minutes with the temperature maintained at 20°C. Next, a mixture containing 14.4 g of cyclohexane and 7 g of PDI was added dropwise over a period of 10 minutes, and following completion of the dropwise addition, stirring was continued for 20 minutes. Subsequently, the obtained solution was transferred to a separating funnel, 50 g of ion-exchanged water was added, and an extraction operation was performed. Residual methanol in the aqueous solution was then removed by distillation under reduced pressure at room temperature. An appropriate amount of ion-exchanged water was then added to adjust the solid fraction to 50% by mass, thus obtaining a semicarbazide composition S-a12.

[Example 13]

(Production of Semicarbazide Composition S-a13)

A 2 L reactor fitted with a reflux condenser, a dropping funnel, a thermometer and a stirring device was charged with 10 g of ion-exchanged water, 160 g of methanol and 51.1 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of xylylene diisocyanate (XDI) was added dropwise over a period of 3 hours, and following completion of the dropwise addition, stirring was continued for 30 minutes with the temperature maintained at 20°C. Next, a mixture containing 10 g of toluene and 3 g of 24A was added dropwise over a period of 10 minutes, and following completion of the dropwise addition, stirring was continued for 20 minutes. Subsequently, the obtained solution was transferred to a separating funnel, 40 g of ion-exchanged water was added, and an extraction operation was performed. Residual methanol in the aqueous solution was then removed by distillation under reduced pressure at room temperature. An appropriate amount of ion-exchanged water was then added to adjust the solid fraction to 50% by mass, thus obtaining a semicarbazide composition S-a13.

[Example 14]

(Production of Semicarbazide Composition S-a4)

A 2 L reactor fitted with a reflux condenser, a dropping funnel, a thermometer and a stirring device was charged with 55 g of ion-exchanged water, 20 g of isopropanol and 17.9 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of an HDI and IPDI-based biuret polyisocyanate (hereafter sometimes referred to as "V3000") manufactured by Asahi Kasei Corporation was added dropwise over a period of 3 hours, and following completion of the dropwise addition, stirring was continued for 30 minutes with the temperature maintained at 20°C. Next, a mixture containing 10 g of toluene and 0.8 g of TTI was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a14.

[Example 15]

(Production of Semicarbazide Composition S-a15)

A 2 L reactor fitted with a reflux condenser, a dropping funnel, a thermometer and a stirring device was charged with 40 g of ion-exchanged water, 100 g of isopropanol and 42.7 g of hydrazine monohydrate while the reactor was flushed with nitrogen at 1 L/minute, and the contents of the reactor were then stirred while the temperature inside the reactor was maintained at 25°C. Subsequently, a mixture containing 381 g of toluene and 100 g of IPDI was added dropwise over a period of 3 hours, and following completion of the dropwise addition, stirring was continued for 30 minutes with the temperature maintained at 25°C. Next, a mixture containing 10 g of toluene and 3 g of XDI was added dropwise over a period of 10 minutes, and following completion of the dropwise addition, stirring was continued for 20 minutes. Subsequently, the obtained solution was transferred to a separating funnel, 40 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a15.

[Example 16]

(Production of Semicarbazide Composition S-a16)

A 2 L reactor fitted with a reflux condenser, a dropping funnel, a thermometer and a stirring device was charged with 105 g of ion-exchanged water and 26.9 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of 24A was added dropwise over a period of 3 hours, and following completion of the dropwise addition, stirring was continued for 30 minutes with the temperature maintained at 20°C. Next, a mixture containing 10 g of toluene and 1.4 g of HDI was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. The obtained solution was then transferred to a separating funnel, and after leaving to stand overnight, the lower-phase aqueous solution of the two separated phases was collected, thus obtaining a semicarbazide composition S-a16.

[Example 17]

(Production of Semicarbazide Composition S-a17)

A 2 L reactor fitted with a reflux condenser, a dropping funnel, a thermometer and a stirring device was charged with 30 g of ion-exchanged water, 120 g of isopropanol and 45.8 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of naphthalene diisocyanate (NDI) was added dropwise over a period of 3 hours, and following completion of the dropwise addition, stirring was continued for 30 minutes with the temperature maintained at 20°C. Next, a mixture containing 10 g of toluene and 2.5 g of TTI was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a17.

[Example 18]

(Production of Semicarbazide Composition S-a18)

A 2 L reactor fitted with a reflux condenser, a dropping funnel, a thermometer and a stirring device was charged with 90 g of ion-exchanged water, 50 g of methanol and 42.7 g of hydrazine monohydrate while the reactor was flushed with nitrogen at 1 L/minute, and the contents of the reactor were then stirred while the temperature inside the reactor was maintained at 20°C. Subsequently, a mixture containing 381 g of cyclohexane and 100 g of IPDI was added dropwise over a period of 3 hours, and following completion of the dropwise addition, stirring was continued for 30 minutes with the temperature maintained at 20°C. Next, a mixture containing 10 g of toluene and 1 g of diphenylmethane diisocyanate (MDI) was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual methanol in the aqueous solution was then removed by distillation under reduced pressure at room temperature. An appropriate amount of ion-exchanged water was then added to adjust the solid fraction to 50% by mass, thus obtaining a semicarbazide composition S-a18.

[Example 19]

(Production of Semicarbazide Composition S-a19)

A 2 L reactor fitted with a reflux condenser, a dropping funnel, a thermometer and a stirring device was charged with 128.8 g of ion-exchanged water and 42.7 g of hydrazine monohydrate while the reactor was flushed with nitrogen at 1 L/minute, and the contents of the reactor were then stirred while the temperature inside the reactor was maintained at 10°C. Subsequently, a mixture containing 14.4 g of toluene and 4.0 g of TTI was added dropwise over a period of 10 minutes, and following completion of the dropwise addition, stirring was continued for 20 minutes. Next, a mixture containing 381 g of toluene and 100 g of isophorone diisocyanate was added dropwise over a period of 3 hours while stirring was continued, and stirring was then continued for 30 minutes with the temperature maintained at 10°C. Subsequently, the obtained solution was transferred to a separating funnel, and after leaving to stand overnight, the lower-phase aqueous solution of the two separated phases was collected, thus obtaining a semicarbazide composition S-a19.

[Example 20]

(Production of Semicarbazide Composition S-a20)

A 2 L reactor fitted with a reflux condenser, a dropping funnel, a thermometer and a stirring device was charged with 90 g of ion-exchanged water, 50 g of isopropanol and 42.7 g of hydrazine monohydrate while the reactor was flushed with nitrogen at 1 L/minute, and the contents of the reactor were then stirred while the temperature inside the reactor was maintained at 5°C. Subsequently, a mixture containing 381 g of cyclohexane and 100 g of IPDI was added dropwise over a period of 3 hours, and following completion of the dropwise addition, stirring was continued for 30 minutes with the temperature maintained at 5°C. Next, a mixture containing 14.4 g of cyclohexane and 15.3 g of HDI was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-a20.

[Comparative Example 1]

(Production of Semicarbazide Composition S-b1)

A 2 L reactor fitted with a reflux condenser, a dropping funnel, a thermometer and a stirring device was charged with 40 g of ion-exchanged water, 100 g of isopropanol and 42.7 g of hydrazine monohydrate while the reactor was flushed with nitrogen at 1 L/minute, and the contents of the reactor were then stirred while the temperature inside the reactor was maintained at 25°C. Subsequently, a mixture containing 381 g of toluene and 100 g of IPDI was added dropwise over a period of 3 hours, and following completion of the dropwise addition, stirring was continued for 30 minutes with the temperature maintained at 25°C. Subsequently, the obtained solution was transferred to a separating funnel, 80 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-b1.

[Comparative Example 2]

(Production of Semicarbazide Composition S-b2)

A 2 L reactor fitted with a reflux condenser, a dropping funnel, a thermometer and a stirring device was charged with 128.8 g of ion-exchanged water and 42.7 g of hydrazine monohydrate while the reactor was flushed with nitrogen at 1 L/minute, and the contents of the reactor were then stirred while the temperature inside the reactor was maintained at 10°C. Subsequently, a mixture containing 14.4 g of cyclohexane and 3.8 g of HDI was added dropwise over a period of 10 minutes, and following completion of the dropwise addition, stirring was continued for 20 minutes. Next, a mixture containing 381 g of cyclohexane and 100 g of IPDI was added dropwise over a period of 3 hours while stirring was continued, and stirring was then continued with the temperature maintained at 10°C, but the entire solution gelled, and a semicarbazide composition S-b2 could not be obtained.

[Comparative Example 3]

(Production of Semicarbazide Composition S-b3)

A 2 L reactor fitted with a reflux condenser, a dropping funnel, a thermometer and a stirring device was charged with 40 g of ion-exchanged water, 50 g of isopropanol and 19.6 g of hydrazine monohydrate while the reactor was flushed with nitrogen at 1 L/minute, and the contents of the reactor were then stirred while the temperature inside the reactor was maintained at 20°C. Subsequently, a mixture containing 381 g of toluene and 100 g of WT31 was added dropwise over a period of 3 hours, and following completion of the dropwise addition, stirring was continued for 30 minutes with the temperature maintained at 20°C. Next, a mixture containing 10 g of toluene and 3 g of V3000 was added dropwise over a period of 10 minutes, and following completion of the dropwise addition, stirring was continued for 20 minutes. Subsequently, the obtained solution was transferred to a separating funnel, 40 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-b3.

[Comparative Example 4]

(Production of Semicarbazide Composition S-b4)

A 2 L reactor fitted with a reflux condenser, a dropping funnel, a thermometer and a stirring device was charged with 80 g of ion-exchanged water, 80 g of methanol and 42.7 g of hydrazine monohydrate while the reactor was flushed with nitrogen at 1 L/minute, and the contents of the reactor were then stirred while the temperature inside the reactor was maintained at 5°C. Subsequently, a mixture containing 381 g of toluene and 100 g of IPDI was added dropwise over a period of 3 hours, and following completion of the dropwise addition, stirring was continued for 30 minutes with the temperature maintained at 5°C. Next, a mixture containing 10 g of toluene and 7 g of NDI was added dropwise over a period of 10 minutes, and following completion of the dropwise addition, stirring was continued for 20 minutes. Subsequently, the obtained solution was transferred to a separating funnel, 30 g of ion-exchanged water was added, and an extraction operation was performed. Residual methanol in the aqueous solution was then removed by distillation under reduced pressure at room temperature. An appropriate amount of ion-exchanged water was then added to adjust the solid fraction to 50% by mass, thus obtaining a semicarbazide composition S-b4.

[Comparative Example 5]

(Production of Semicarbazide Composition S-b5)

A 2 L reactor fitted with a reflux condenser, a dropping funnel, a thermometer and a stirring device was charged with 40 g of ion-exchanged water, 100 g of isopropanol and 42.7 g of hydrazine monohydrate while the reactor was flushed with nitrogen at 1 L/minute, and the contents of the reactor were then stirred while the temperature inside the reactor was maintained at 25°C. Subsequently, a mixture containing 381 g of toluene and 100 g of HDI was added dropwise over a period of 3 hours, and following completion of the dropwise addition, stirring was continued for 30 minutes with the temperature maintained at 25°C. Subsequently, the obtained solution was transferred to a separating funnel, 80 g of ion-exchanged water was added, and an extraction operation was performed. Residual isopropanol in the aqueous solution was then removed by distillation under reduced pressure at room temperature. An appropriate amount of ion-exchanged water was then added to adjust the solid fraction to 50% by mass, thus obtaining a semicarbazide composition S-b5.

The physical properties of the semicarbazide compositions obtained in the examples and comparative examples, and the results of the evaluations conducted using the semicarbazide compositions as test samples are shown in Tables 2 to 6. The full name and the SP value at 25°C for each of the isocyanate compounds that are listed using an abbreviation in Tables 2 to 6 are as follows. Each SP value represents a value that has been estimated from the molecular structure using the Fedors method, using the formula shown below and the constants shown above in Table 1. In the formula below, $\sum E_{coh}$ represents the sum of the cohesive energies, and $\sum V$ represents the sum of the molar molecular

volumes.

[Numerical formula 2]

$$\delta = [\Sigma E_{coh} / \Sigma V]^{1/2}$$

(Isocyanate Compounds)

IPDI: isophorone diisocyanate (SP value: 10.53 $(cal/cm^3)^{1/2}$)
WT31: an HDI-based isocyanurate polyisocyanate manufactured by Asahi Kasei Corporation (SP value: 11.87 $(cal/cm^3)^{1/2}$)
XDI: xylylene diisocyanate (SP value: 12.35 $(cal/cm^3)^{1/2}$)
V3000: an HDI and IPDI-based biuret polyisocyanate manufactured by Asahi Kasei Corporation (SP value: 12.01 $(cal/cm^3)^{1/2}$)
NDI: naphthalene diisocyanate (SP value: 13.27 $(cal/cm^3)^{1/2}$)
MDI: diphenylmethane diisocyanate (SP value: 12.55 $(cal/cm^3)^{1/2}$)
HDI: hexamethylene diisocyanate (SP value: 11.14 $(cal/cm^3)^{1/2}$)
PDI: pentamethylene diisocyanate (SP value: 11.38 $(cal/cm^3)^{1/2}$)
LTI: lysine ester triisocyanate (SP value: 12.21 $(cal/cm^3)^{1/2}$)
TTI: 4-isocyanatomethyl-1,8-octamethylene diisocyanate (SP value: 11.48 $(cal/cm^3)^{1/2}$)
24A: an HDI-based biuret polyisocyanate manufactured by Asahi Kasei Corporation (SP value: 12.03 $(cal/cm^3)^{1/2}$)

[Table 2]

| | | | Example 1 | Example 2 | Example 3 | Example 4 | Example 5 |
|---|---|---|---|---|---|---|---|
| Semicarbazide composition | | | S-a1 | S-a2 | S-a3 | S-a4 | S-a5 |
| Composition (molar ratio) | Isocyanate compound | IPDI | 100.0 | 100.0 | 100.0 | 100.0 | 100.0 |
| | | WT31 | | | | | |
| | | XDI | | | | | |
| | | V3000 | | | | | |
| | | NDI | | | | | |
| | | MDI | | | | | |
| | | HDI | 0.6 | 1.5 | 5.0 | 14.8 | 18.9 |
| | | PDI | | | | | |
| | | TTI | | | | | |
| | | LTI | | | | | |
| | | 24A | | | | | |
| Physical prope rties | ΔSP value | | 0.61 | 0.61 | 0.61 | 0.61 | 0.61 |
| Evaluations | Storage stability | | 8.5 | 8.5 | 8.4 | 8.3 | 8.3 |
| | Solubility and dispersibility in coating materials | | ○ | ○ | ○ | ○ | ○ |

[Table 3]

| | | | Example 6 | Example 7 | Example 8 | Example 9 | Example 10 |
|---|---|---|---|---|---|---|---|
| Semicarbazide composition | | | S-a6 | S-a7 | S-a8 | S-a9 | S-a10 |
| Composition (molar ratio) | Isocyanate compound | IPDI | 100.0 | 100.0 | 100.0 | 100.0 | |
| | | WT31 | | | | | 100.0 |
| | | XDI | | | | | |
| | | V3000 | | | | | |
| | | NDI | | | | | |
| | | MDI | | | | | |
| | | HDI | | | | | |
| | | PDI | 9.1 | | | | |
| | | TTI | | 1.0 | | | |
| | | LTI | | | 6.9 | | |
| | | 24A | | | | 1.1 | 3.9 |
| Physical prope rties | ΔSP value | | 0.85 | 0.95 | 1.68 | 1.50 | 0.16 |
| Evaluations | Storage stability | | 8.3 | 8.3 | 8.2 | 8.4 | 8.4 |
| | Solubility and dispersibility in coating materials | | ○ | ○ | ○ | ○ | Δ |

[Table 4]

| | | | Example 11 | Example 12 | Example 13 | Example 14 | Example 15 |
|---|---|---|---|---|---|---|---|
| Semicarbazide composition | | | S-a11 | S-a12 | S-a13 | S-a14 | S-a15 |
| Composition (molar ratio) | Isocyanate compound | IPDI | | | | | 100.0 |
| | | WT31 | | | | | |
| | | XDI | 100.0 | 100.0 | 100.0 | | 3.5 |
| | | V3000 | | | | 100.0 | |
| | | NDI | | | | | |
| | | MDI | | | | | |
| | | HDI | 6.7 | | | | |
| | | PDI | | 8.5 | | | |
| | | TTI | | | | 2.5 | |
| | | LTI | | | | | |
| | | 24A | | | 0.9 | | |
| Physical prope rties | ΔSP value | | 1.21 | 0.97 | 0.32 | 0.53 | 1.82 |
| Evaluations | Storage stability | | 8.2 | 8.1 | 8.4 | 8.5 | 8.7 |
| | Solubility and dispersibility in coating materials | | ○ | ○ | Δ | ○ | ○ |

[Table 5]

| | | | Example 16 | Example 17 | Example 18 | Example 19 | Example 20 |
|---|---|---|---|---|---|---|---|
| Semicarbazide composition | | | S-a16 | S-a17 | S-a18 | S-a19 | S-a20 |
| Composition (molar ratio) | Isocyanate compound | IPDI | | | 100.0 | 100.0 | 100.0 |
| | | WT31 | | | | | |
| | | XDI | | | | | |
| | | V3000 | | | | | |
| | | NDI | | 100.0 | | | |
| | | MDI | | | 0.9 | | |
| | | HDI | 5.0 | | | | 20.2 |
| | | PDI | | | | | |
| | | TTI | | 2.1 | | 1.0 | |
| | | LTI | | | | | |
| | | 24A | 100.0 | | | | |
| Physical prope rties | ΔSP value | | 0.89 | 1.79 | 2.02 | 0.95 | 0.61 |
| Evaluations | Storage stability | | 8.6 | 8.2 | 8.8 | 8.8 | 8.2 |
| | Solubility and dispersibility in coating materials | | ○ | ○ | ○ | ○ | ○ |

[Table 6]

| | | | Comparative Example 1 | Comparative Example 2 | Comparative Example 3 | Comparative Example 4 |
|---|---|---|---|---|---|---|
| Semicarbazide composition | | | S-b1 | S-b2 | S-b3 | S-b4 |
| Composition (molar ratio) | Isocyanate compound | IPDI | 100.0 | | 100.0 | |
| | | WT31 | | 100.0 | | |
| | | XDI | | | | |
| | | V3000 | | 2.9 | | |
| | | NDI | | | 7.4 | |
| | | MDI | | | | |
| | | HDI | | | | 100.0 |
| | | PDI | | | | |
| | | TTI | | | | |
| | | LTI | | | | |
| | | 24A | | | | |
| Physical properties | ΔSP value | | 0 | 0.14 | 2.74 | 0 |

(continued)

| | | Comparative Example 1 | Comparative Example 2 | Comparative Example 3 | Comparative Example 4 |
|---|---|---|---|---|---|
| Evaluations | Storage stability | 9.0 | 9.1 | 8.9 | 8.9 |
| | Solubility and dispersibility in coating materials | × | × | ○ | × |

From Tables 2 to 6 it was evident that for the semicarbazide compositions S-al to S-a20 (Examples 1 to 20) which used two isocyanate compounds having an absolute value for the difference in the SP values of at least 0.16 but not more than 2.02, the storage stability, and the solubility and dispersibility in coating materials were both favorable.

Further, for the semicarbazide compositions S-al to S-a14 and S-a17 (Examples 1 to 14 and 17) which used a combination of an isocyanate compound having at least one cyclic structure within the molecule and an isocyanate compound not having a cyclic structure within the molecule, the storage stability was particularly favorable.

Furthermore, for the semicarbazide compositions S-a1 to S-a9, S-a11 to S-a12, and S-a14 to S-a20 (Examples 1 to 9, 11 to 12, and 14 to 20) which used two isocyanate compounds having an absolute value for the difference in the SP values of at least 0.53, the solubility and dispersibility in coating materials was particularly favorable.

In contrast, for the semicarbazide compositions S-b1 and S-b5 (Comparative Examples 1 and 5) which used only one isocyanate compound, the storage stability, and the solubility and dispersibility in coating materials were both poor.

Further, for the semicarbazide composition S-b3 (Comparative Example 3) which used two isocyanate compounds having an absolute value for the difference in the SP values of less than 0.15, the storage stability, and the solubility and dispersibility in coating materials were both poor.

Furthermore, for the semicarbazide composition S-b4 (Comparative Example 4) which used two isocyanate compounds having an absolute value for the difference in the SP values that exceeded 2.10, although the solubility and dispersibility in coating materials was favorable, the storage stability was poor.

<Production of Water-Based Coating Compositions>

[Example 21]

(Production of Water-Based Coating Composition T-a1)

Fifty grams of the carbonyl group-containing resin C-1 produced in Production Example 1, 1.9 g of the semicarbazide composition S-a1 produced in Example 1, and 5 g of butyl cellosolve were mixed by stirring at room temperature, thus producing a water-based coating composition T-a1.

[Examples 22 to 43 and Comparative Examples 6 to 8 and 10]

(Production of Water-Based Coating Compositions T-a2 to T-a23, and T-b1 to T-b3 and T-b5)

With the exceptions of using the types of carbonyl group-containing resins and semicarbazide compositions in the blend amounts shown in Tables 7 to 12, the same method as Example 21 was used to produce water-based coating compositions T-a2 to Ta23, and T-b1 to T-b3 and T-b5.

[Comparative Example 9]

(Production of Water-Based Coating Compositions T-b4)

Fifty grams of the carbonyl group-containing resin C-1 produced in Production Example 1, 0.5 g of adipic acid hydrazide (ADH), and 5 g of butyl cellosolve were mixed by stirring at room temperature, thus producing a water-based coating composition T-b4.

Using the water-based coating compositions obtained in the above examples and comparative examples, various evaluations were conducted using the methods described above. The results are shown in Tables 7 to 12.

[Table 7]

| | | | Example 21 | Example 22 | Example 23 | Example 24 | Example 25 |
|---|---|---|---|---|---|---|---|
| Water-based coating composition | | | T-a1 | T-a2 | T-a3 | T-a4 | T-a5 |
| Composition (parts by mass) | Semicarbazide composition | S-a1 | 1.9 | | | | |
| | | S-a2 | | 1.9 | | | |
| | | S-a3 | | | 1.9 | | |
| | | S-a4 | | | | 1.9 | |
| | | S-a5 | | | | | 1.9 |
| | | S-a6 | | | | | |
| | | S-a7 | | | | | |
| | | S-a8 | | | | | |
| | | S-a9 | | | | | |
| | | S-a10 | | | | | |
| | | S-a11 | | | | | |
| | | S-a12 | | | | | |
| | CO group-containing resin (C) | C-1 | 50 | 50 | 50 | 50 | 50 |
| | | C-2 | | | | | |
| | | C-3 | | | | | |
| | | C-4 | | | | | |
| | Other | ADH | | | | | |
| Evaluations | Short-term curability | | Δ | O | O | O | O |
| | Water resistance | | O | O | O | O | O |
| | Koenig hardness | | O | O | O | O | Δ |
| | Transparency | | 0.3 | 0.2 | 0.4 | 0.3 | 0.2 |

[Table 8]

| | | | Example 26 | Example 27 | Example 28 | Example 29 | Example 30 |
|---|---|---|---|---|---|---|---|
| Water-based coating composition | | | T-a6 | T-a7 | T-a8 | T-a9 | T-a10 |
| Composition (parts by mass) | Semicarbazide composition | S-a1 | | | | | |
| | | S-a2 | | | | | |
| | | S-a3 | | | | | |
| | | S-a4 | | | | | |
| | | S-a5 | | | | | |
| | | S-a6 | 1.9 | | | | |
| | | S-a7 | | 1.9 | | | |
| | | S-a8 | | | 1.9 | | |
| | | S-a9 | | | | 1.9 | |
| | | S-a10 | | | | | 6.6 |
| | | S-a11 | | | | | |
| | | S-a12 | | | | | |
| | CO group-containing resin (C) | C-1 | 50 | 50 | 50 | 50 | 50 |
| | | C-2 | | | | | |
| | | C-3 | | | | | |
| | | C-4 | | | | | |
| | Other | ADH | | | | | |
| Evaluations | Short-term curability | | O | O | O | O | O |
| | Water resistance | | O | O | O | O | O |
| | Koenig hardness | | O | O | O | Δ | O |
| | Transparency | | 0.4 | 0.2 | 1.0 | 0.9 | 0.3 |

[Table 9]

| | | | Example 31 | Example 32 | Example 33 | Example 34 | Example 35 |
|---|---|---|---|---|---|---|---|
| Water-based coating composition | | | T-a11 | T-a12 | T-a13 | T-a14 | T-a15 |
| Composition (parts by mass) | Semicarbazide composition | S-a1 | | | | | |
| | | S-a2 | | | | | |
| | | S-a3 | 3.8 | 5.7 | 1.9 | | |
| | | S-a4 | | | | | |
| | | S-a5 | | | | | |
| | | S-a6 | | | | | |
| | | S-a7 | | | | | |
| | | S-a8 | | | | | |
| | | S-a9 | | | | | |
| | | S-a10 | | | | | |
| | | S-a11 | | | | 1.6 | |
| | | S-a12 | | | | | 1.6 |
| | CO group-containing resin (C) | C-1 | | | | 50 | 50 |
| | | C-2 | 50 | | | | |
| | | C-3 | | 50 | | | |
| | | C-4 | | | 50 | | |
| | Other | ADH | | | | | |
| Evaluations | Short-term curability | | O | O | O | O | O |
| | Water resistance | | O | O | O | O | O |
| | Koenig hardness | | O | O | O | O | O |
| | Transparency | | 0.4 | 0.4 | 0.2 | 0.8 | 0.5 |

[Table 10]

| | | | Example 36 | Example 37 | Example 38 | Example 39 |
|---|---|---|---|---|---|---|
| Water-based coating composition | | | T-a16 | T-a17 | T-a18 | T-a19 |
| Composition (parts by mass) | Semicarbazide composition | S-a13 | 1.6 | | | |
| | | S-a14 | | 6.8 | | |
| | | S-a15 | | | 1.9 | |
| | | S-a16 | | | | 5.1 |
| | | S-a17 | | | | |
| | | S-a18 | | | | |
| | | S-a19 | | | | |
| | | S-a20 | | | | |
| | | S-a21 | | | | |
| | | S-a22 | | | | |
| | | S-a23 | | | | |
| | | S-a24 | | | | |
| | CO group-containing resin (C) | C-1 | 50 | 50 | 50 | 50 |
| | | C-2 | | | | |
| | | C-3 | | | | |
| | | C-4 | | | | |
| | Other | ADH | | | | |
| Evaluations | Short-term curability | | O | O | × | O |
| | Water resistance | | O | O | O | Δ |
| | Koenig hardness | | O | O | O | × |
| | Transparency | | 0.2 | 0.4 | 1.5 | 0.4 |

[Table 11]

| | | | Example 40 | Example 41 | Example 42 | Example 43 |
|---|---|---|---|---|---|---|
| Water-based coating composition | | | T-a20 | T-a21 | T-a22 | T-a23 |
| Composition (parts by mass) | Semicarbazide composition | S-a13 | | | | |
| | | S-a14 | | | | |
| | | S-a15 | | | | |
| | | S-a16 | | | | |
| | | S-a17 | 1.8 | | | |
| | | S-a18 | | 1.9 | | |
| | | S-a19 | | | 1.9 | |
| | | S-a20 | | | | 1.9 |
| | | S-a21 | | | | |
| | | S-a22 | | | | |
| | | S-a23 | | | | |
| | | S-a24 | | | | |
| | CO group-containing resin (C) | C-1 | 50 | 50 | | 50 |
| | | C-2 | | | | |
| | | C-3 | | | | |
| | | C-4 | | | | |
| | Other | ADH | | | | |
| Evaluations | Short-term curability | | O | × | O | O |
| | Water resistance | | O | O | O | O |
| | Koenig hardness | | O | O | O | × |
| | Transparency | | 1.3 | 1.9 | 0.4 | 0.5 |

[Table 12]

| | | | Comparative Example 6 | Comparative Example 7 | Comparative Example 8 | Comparative Example 9 | Comparative Example 10 |
|---|---|---|---|---|---|---|---|
| Water-based coating composition | | | T-b1 | T-b2 | T-b3 | T-b4 | T-b5 |
| Composition (parts by mass) | Semicarbazide composition | S-a13 | | | | | |
| | | S-a14 | | | | | |
| | | S-a15 | | | | | |
| | | S-a16 | | | | | |
| | | S-a17 | | | | | |
| | | S-a18 | | | | | |
| | | S-a19 | | | | | |
| | | S-a20 | | | | | |
| | | S-a21 | 1.9 | | | | |
| | | S-a22 | | 6.6 | | | |
| | | S-a23 | | | 1.9 | | |
| | | S-a24 | | | | | 1.8 |
| | CO group-containing resin (C) | C-1 | 50 | 50 | 50 | 50 | 50 |
| | | C-2 | | | | | |
| | | C-3 | | | | | |
| | | C-4 | | | | | |
| | Other | ADH | | | | 0.5 | |
| Evaluations | Short-term curability | | × | × | × | O | O |
| | Water resistance | | O | O | O | × | × |
| | Koenig hardness | | O | O | O | × | × |
| | Transparency | | 0.3 | 0.7 | 2.5 | 0.6 | 0.6 |

For the water-based coating compositions T-a1 to T-a23 (Examples 21 to 43) which used the semicarbazide compositions S-a1 to S-a20, the water resistance and transparency upon coating film formation were both favorable.

Further, for the water-based coating compositions T-a1 to T-a17, T-a19 to T-a20, and T-a22 to T-a23 (Examples 21 to 37, 39 to 40, and 42 to 43) which used the semicarbazide compositions S-a1 to S-a14, S-a16 to S-a17, and S-a19 to S-a20 containing a semicarbazide compound derived from an isocyanate compound not having a cyclic structure within the molecule and a hydrazine, the curability in a short period of time at normal temperature was particularly favorable.

Furthermore, for the water-based coating compositions T-a1 to T-a18 and T-a20 to T-a23 (Examples 21 to 38 and 40 to 43) which used the semicarbazide compositions S-a1 to S-a15 and S-a17 to S-a20 containing a semicarbazide compound derived from an isocyanate compound having at least one cyclic structure within the molecule and a hydrazine, the water resistance and hardness upon coating film formation were particularly favorable.

Further, the water-based coating compositions T-a1 to T-a5 (Examples 21 to 25) which used the semicarbazide compositions S-a1 to S-a5 in which the number of moles of structural units derived from an isocyanate compound not having a cyclic structure within the molecule, relative to the number of moles of structural units derived from an isocyanate compound having at least one cyclic structure within the molecule, is not more than 20 mol%, exhibited particularly favorable hardness upon coating film formation compared with the water-based coating composition T-a23 (Example 43) which used the semicarbazide composition S-a20 in which the number of moles of structural units derived from an isocyanate compound not having a cyclic structure within the molecule, relative to the number of moles of structural units derived from an isocyanate compound having at least one cyclic structure within the molecule, exceeded 20 mol%.

Furthermore, for the water-based coating compositions T-a1 to T-a7, T-a10 to Ta17, T-a19, and T-a22 to T-a23 (Examples 21 to 27, 29 to 37, 39, and 42 to 43) which used the semicarbazide compositions S-a1 to S-a7, S-a10 to S-a14, S-a16 and S-a19 to S-a20 that used two isocyanate compounds for which the absolute value for the difference in the SP values was less than 1.50, the transparency upon coating film formation was particularly favorable.

In contrast, for the water-based coating composition T-b1 (Comparative Example 6) which used the semicarbazide composition S-b1 containing only a semicarbazide compound derived from IPDI and hydrazine, although the water resistance, hardness and transparency upon coating film formation were excellent, the curability in a short period of time at normal temperature was poor.

Further, for the water-based coating composition T-b5 (Comparative Example 10) which used the semicarbazide composition S-b5 containing only a semicarbazide compound derived from HDI and hydrazine, although the curability in a short period of time at normal temperature and the transparency upon coating film formation were excellent, the water resistance and hardness upon coating film formation were poor.

Furthermore, for the water-based coating composition T-b2 (Comparative Example 7) which used the semicarbazide composition S-b2 that used two isocyanate compounds for which the absolute value for the difference in the SP values was less than 0.15, although the water resistance, hardness and transparency upon coating film formation were excellent, the curability in a short period of time at normal temperature was poor.

Further, for the water-based coating composition T-b3 (Comparative Example 8) which used the semicarbazide composition S-b3 that used two isocyanate compounds for which the absolute value for the difference in the SP values exceeded 2.10, although the water resistance and hardness upon coating film formation were excellent, the curability in a short period of time at normal temperature and the transparency upon coating film formation were poor.

Furthermore, for the water-based coating composition T-b4 (Comparative Example 9) which used adipic acid hydrazide as the curing agent component instead of a semicarbazide compound, although the curability in a short period of time at normal temperature and the transparency upon coating film formation were excellent, the water resistance and hardness upon coating film formation were poor.

[Example 44]

(Production of Water-Based Coating Composition T-a24)

Fifty grams of the carbonyl group-containing resin C-4 produced in Production Example 4, 1.9 g of the semicarbazide composition S-a9 produced in Example 9, and 5 g of butyl cellosolve were mixed by stirring at room temperature, thus producing a water-based coating composition T-a24.

[Test Example 1]

(Evaluation of Pot Life)

The molecular weight per functional group of the semicarbazide composition S-a3 obtained in Example 3 was 153 g/mol. Further, the molecular weight per functional group of the semicarbazide composition S-a9 obtained in Example 9 was 158 g/mol. The molecular weight per functional group was determined by the method using LC/MS disclosed in Japanese Patent (Granted) Publication No. 5990277. Next, the water-based coating composition T-a13 (Example 33) that used the semicarbazide composition S-a3 (Example 3) and the water-based coating composition T-a24 (Example 44) that used the semicarbazide composition S-a9 (Example 9) were each stored in an atmosphere at 40°C for 10 days, and the change in viscosity was measured. The results revealed that both of the water-based coating compositions T-a13 and T-a24 exhibited favorable pot life with no change in viscosity.

[Comparative Example 11]

(Production of Water-Based Coating Composition T-b6)

Fifty grams of the carbonyl group-containing resin C-4 produced in Production Example 4, 0.5 g of adipic acid hydrazide (ADH), and 5 g of butyl cellosolve were mixed by stirring at room temperature, thus producing a water-based coating composition T-b6.

[Comparative Example 12]

(Production of Water-Based Coating Composition T-b7)

Fifty grams of the hydroxyl group-containing resin OHEm produced in Production Example 5, 7.5 g of WT31-100 (an HDI-based isocyanurate polyisocyanate manufactured by Asahi Kasei Corporation, NCO% = 17.4%), and 5 g of butyl cellosolve were mixed by stirring at room temperature, thus producing a water-based coating composition T-b7.

[Test Example 2]

(Evaluation of Coating Film Curability)

The water-based coating compositions T-a13, T-a24, T-b6 and T-b7 were each coated onto a PP sheet with an applicator in an amount sufficient to form a resin film thickness of 40 μm. Following application, the PP sheet was dried, either at a temperature of 23°C and a humidity of 50% for 7 days, or at 70°C for 5 minutes. Subsequently, the coating film was peeled from the PP sheet in the form of a film, and the residual film ratio (gel fraction) upon immersion of the peeled coating film in acetone at 23°C for 24 hours was measured. The gel fraction under each set of conditions is shown in Table 13.

[Table 13]

| Water-based coating composition | | T-a13 | T-a24 | T-b6 | T-b7 |
|---|---|---|---|---|---|
| Gel fraction (%) | 23°C, 7 days | 91 | 91 | 87 | 95 |
| | 70°C, 5 minutes | 82 | 82 | 76 | 58 |

Based on Table 13, it is evident that, under both sets of curing conditions, the coating films obtained from the water-based coating compositions T-a13 (Example 33) and T-a24 (Example 44) exhibited higher gel fraction values than the coating films obtained from the water-based coating compositions T-b6 (Comparative Example 11) and T-b7 (Comparative Example 12).

[Test Example 3]

(Evaluation of Coating Film Solvent Resistance)

The water-based coating compositions T-a13, T-a24, T-b6 and T-b7 were each coated onto a PP sheet with an applicator in an amount sufficient to form a resin film thickness of 40 μm. Following application, the PP sheet was dried at a temperature of 23°C and a humidity of 50% for 7 days. Subsequently, 0.1 mL of xylene was dripped onto the obtained coating film, a watch glass was then placed on top of the sheet, and the sheet was left to stand overnight at a temperature of 23°C. The following day, the watch glass was removed, and the external appearance of the coating film was inspected. The results revealed that blistering was observed only on the coating film obtained from the water-based coating composition T-b6 (Comparative Example 11), with the coating films obtained from the water-based coating compositions T-a13 (Example 33), T-a24 (Example 44) and T-b7 (Comparative Example 12) displaying only a liquid mark, indicating favorable solvent resistance.

[Test Example 4]

(Evaluation of Coating Film Mechanical Strength)

The water-based coating compositions T-a13, T-a24, T-b6 and T-b7 were each coated onto a PP sheet with an applicator in an amount sufficient to form a resin film thickness of 40 μm. Following application, the PP sheet was dried at a temperature of 23°C and a humidity of 50% for 7 days. Subsequently, a coating film piece with a width of 1 cm and a length of 4 cm was cut from the obtained coating film. This coating film piece was pulled at 20 mm/minute in an atmosphere at 23°C and 50% RH, and the stress and elongation were measured. The elastic modulus was determined from the stress when the coating film had stretched 5%. The obtained elastic modulus and the elongation at break are shown in Table 14.

[Table 14]

| Water-based coating composition | | T-a13 | T-a24 | T-b6 | T-b7 |
|---|---|---|---|---|---|
| Tensile test | Elastic modulus (MPa) | 28 | 29 | 13 | 25 |
| | Elongation at break (%) | 184 | 179 | 200 | 70 |

Based on Table 14, it is evident that the elastic modulus and elongation at break values for the coating films obtained from the water-based coating compositions T-a13 (Example 33) and T-a24 (Example 44) were both higher than the corresponding values obtained from the water-based coating compositions T-b6 (Comparative Example 11) and T-b7 (Comparative Example 12).

[Test Example 5]

(Evaluation of Adhesion of Coating Film to Substrates)

The water-based coating compositions T-a13, T-a24, T-b6 and T-b7 were each coated onto a polymethyl methacrylate (PMMA) resin sheet, a polyethylene terephthalate (PET) resin sheet and an aluminum sheet with an applicator in an amount sufficient to form a resin film thickness of 40 μm on each substrate. Following application, each substrate was dried at a temperature of 23°C and a humidity of 50% for 7 days. A cutter was then used to form cuts in the obtained coating films, thus obtaining a grid having 100 1 mm-square pieces. A cellophane tape was stuck to the top of the squares, and following rubbing with a finger from above the grid, the tape was peeled rapidly away from the substrate, and the number of coating film squares remaining on the substrate was counted. The results for each substrate are shown in Table 15.

[Table 15]

| Water-based coating composition | | T-a13 | T-a24 | T-b6 | T-b7 |
|---|---|---|---|---|---|
| Number of remaining squares | PMMA | 66 | 68 | 18 | 38 |
| | PET | 85 | 88 | 36 | 88 |
| | Aluminum | 94 | 91 | 53 | 2 |

For all of the substrates, the coating films obtained from the water-based coating compositions T-a13 (Example 33) and T-a24 (Example 44) exhibited more favorable adhesion than the coating films from the water-based coating compositions T-b6 (Comparative Example 11) and T-b7 (Comparative Example 12).

INDUSTRIAL APPLICABILITY

The semicarbazide composition of an embodiment of the present invention is ideal as a curing agent for use with coating materials for construction exterior panels, interior materials, coating materials for vehicles, and adhesives and the like.

## Claims

**1.** A semicarbazide composition comprising:

a semicarbazide compound (A1) derived from a hydrazine and an isocyanate compound (a1) having an isocyanate group, and
a semicarbazide compound (B1) derived from a hydrazine and an isocyanate compound (b1) having an isocyanate group and having a different structure from the isocyanate compound (a1), wherein
an absolute value of a difference in solubility parameters of the isocyanate compound (a1) and the isocyanate compound (b1) is at least 0.15 but not more than 2.10.

**2.** The semicarbazide composition according to Claim 1, wherein a number of moles of structural units derived from the isocyanate compound (b1) in the composition, relative to a number of moles of structural units derived from the isocyanate compound (a1), is at least 0.1 mol% but not more than 20 mol%.

**3.** The semicarbazide composition according to Claim 1 or 2, wherein

the isocyanate compound (a1) is an isocyanate compound having at least one cyclic structure per molecule, and the isocyanate compound (b1) is an isocyanate compound not having a cyclic structure within a molecule.

**4.** A semicarbazide composition comprising:

a semicarbazide compound (A2) derived from a hydrazine and an isocyanate compound (a2) having at least one cyclic structure per molecule, and
a semicarbazide compound (B2) derived from a hydrazine and an isocyanate compound (b2) not having a cyclic structure within a molecule, wherein
a number of moles of structural units derived from the isocyanate compound (b2) in the composition, relative to a number of moles of structural units derived from the isocyanate compound (a2), is at least 0.1 mol% but not more than 20 mol%.

**5.** The semicarbazide composition according to any one of Claims 1 to 4, wherein a number average molecular weight of the isocyanate compound (b1) or the isocyanate compound (b2) is 270 or less.

**6.** The semicarbazide composition according to any one of Claims 1 to 5, wherein the isocyanate compound (a1) or the isocyanate compound (a2) is an alicyclic isocyanate.

**7.** The semicarbazide composition according to any one of Claims 1 to 6, wherein the isocyanate compound (b1) or the isocyanate compound (b2) is an aliphatic isocyanate.

**8.** The semicarbazide composition according to any one of Claims 1 to 7, wherein the isocyanate compound (a1) or the isocyanate compound (a2) is isophorone diisocyanate, 1,3-bis(isocyanatomethyl)-cyclohexane or 4,4'-dicyclohexylmethane diisocyanate.

**9.** The semicarbazide composition according to any one of Claims 1 to 8, wherein the isocyanate compound (b1) or the isocyanate compound (b2) is butane diisocyanate, pentamethylene diisocyanate, hexamethylene diisocyanate, trimethylhexamethylene diisocyanate, 4-isocyanatomethyl-1,8-octamethylene diisocyanate, or lysine ester triisocyanate.

**10.** The semicarbazide composition according to any one of Claims 1 to 9, further comprising water.

**11.** The semicarbazide composition according to Claim 10, wherein and amount of the water, relative to a total mass of volatile components contained in the semicarbazide composition, is 70% by mass or more.

**12.** A water-based coating composition comprising the semicarbazide composition of any one of Claims 1 to 11, and a carbonyl group-containing resin (C).

**13.** The water-based coating composition according to Claim 12, wherein an amount of carbonyl group-containing polymerizable monomer units in the carbonyl group-containing resin (C), relative to a total mass of polymerizable monomer units, is at least 1% by mass but not more than 30% by mass.

**14.** A coating film obtained by curing the water-based coating composition of Claim 12 or 13.

**15.** An article comprising the coating film of Claim 14.

**16.** A method for producing a semicarbazide composition comprising, in sequence:

a step 2-1 of reacting a hydrazine and an isocyanate compound (a2) having at least one cyclic structure per molecule to obtain a semicarbazide compound (A2), and
a step 2-2 of reacting a hydrazine and an isocyanate compound (b2) not having a cyclic structure within a molecule to obtain a semicarbazide compound (B2).

**17.** The method for producing a semicarbazide composition according to Claim 16, wherein a reaction temperature for the reaction of the hydrazine and the isocyanate compound (a2) having at least one cyclic structure per molecule or the isocyanate compound (b2) not having a cyclic structure within a molecule is 25°C or lower.

**INTERNATIONAL SEARCH REPORT**

International application No. PCT/JP2019/045981

A. CLASSIFICATION OF SUBJECT MATTER

Int. Cl. G09D5/02(2006.01)i, C08L101/06(2006.01)i, C09D201/06(2006.01)i, C08K3/20(2006.01)i, C09D7/63(2018.01)i
FI: C09D201/06, C09D5/02, C09D7/63, C08K3/20, C08L101/06

According to International Patent Classification (IPC) or to both national classification and IPC

B. FIELDS SEARCHED

Minimum documentation searched (classification system followed by classification symbols)
Int. Cl. C09D5/02, C08L101/06, C09D201/06, G08K3/20, C09D7/63

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2015/053342 A1 (THE NIPPON SYNTHETIC CHEMICAL INDUSTRY CO., LTD.) 16 April 2015, entire text | 1-17 |
| A | WO 2014/077363 A1 (ASAHI KASEI CHEMICALS CORP.) 22 May 2014, entire text | 1-17 |
| A | JP 2005-42023 A (ASAHI KASEI CHEMICALS CORP.) 17 February 2005, entire text | 1-17 |
| A | JP 2003-252847 A (ASAHI KASEI CORP.) 10 September 2003, entire text | 1-17 |
| A | JP 11-21461 A (ASAHI KASEI CORP.) 26 January 1999, entire text | 1-17 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30.01.2020 | 10.02.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/045981

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-316923 A (ASAHI KASEI CORP.) 02 December 1998, entire text | 1-17 |
| A | JP 10-298158 A (ASAHI CHEMICAL INDUSTRY CO., LTD.) 10 November 1998, entire text | 1-17 |
| A | WO 1996/01252 A1 (ASAHI CHEMICAL INDUSTRY CO., LTD.) 18 January 1996, entire text | 1-17 |

Form PCT/ISA/210 (continuation of second sheet) (January 2015)

**INTERNATIONAL SEARCH REPORT**
Information on patent family members

International application No.
PCT/JP2019/045981

| Patent Documents referred to in the Report | Publication Date | Patent Family | Publication Date |
|---|---|---|---|
| WO 2015/053342 A1 | 16.04.2015 | US 2016/0237245 A1<br>entire document<br>EP 3056535 A1<br>CN 105637026 A | |
| WO 2014/077363 A1 | 22.05.2014 | US 2015/0291831 A1<br>entire document<br>EP 2921474 A1<br>CN 104812735 A | |
| JP 2005-42023 A | 17.02.2005 | (Family: none) | |
| JP 2003-252847 A | 10.09.2003 | (Family: none) | |
| JP 11-21461 A | 26.01.1999 | (Family: none) | |
| JP 10-316923 A | 02.12.1998 | (Family: none) | |
| JP 10-298158 A | 10.11.1998 | (Family: none) | |
| WO 1996/01252 A1 | 18.01.1996 | US 5880312 A<br>entire document<br>EP 769492 A1<br>KR 10-1997-0704678 A<br>ES 2139221 T<br>CN 1151730 A<br>TW 311926 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018222334 A
- JP 6287457 A
- JP 5990277 B